# EUROPEAN PATENT SPECIFICATION

(11) **EP 0 651 331 B1**
(45) Date of publication and mention of the grant of the patent: **09.01.2002**
(21) Application number: 94307580.4
(22) Date of filing: 17.10.1994
(51) Int. Cl.: G06F 12/08

(54) **A write buffer for a superpipelined, superscalar microprocessor**
Schreibpuffer für einen superskalaren Mikroprozessor mit Pipeline
Tampon d'écriture pour un microprocesseur superscalaire à pipeline

(30) Priority: 18.10.1993 US 139598; 18.10.1993 US 139596; 18.10.1993 US 138790; 18.10.1993 US 138652; 18.10.1993 US 138654; 18.10.1993 US 138651
(43) Date of publication of application: 03.05.1995
(73) Proprietor: NATIONAL SEMICONDUCTOR CORPORATION, Santa Clara California 95051 (US)
(72) Inventor: Bluhm, Mark, Plano, Texas 75082 (US); Garibay, Raul A., Jr., Richardson, Texas 75080 (US); Quattromani, Marc A., Allen, Texas 75002 (US); Hervin, Mark W., Texas 75252 (US); Patwa, Nital, Texas 75093 (US)
(74) Representative: Harris, Ian Richard

(56) References cited:
- EP-A- 0 442 690
- COMPUTER ARCHITECTURE NEWS, vol.19, no.3, May 1991, NEW YORK US pages 160 - 168 M. NAKAJIMA ET AL. 'A VLSI superscalar processor architecture for numerical applications'
- ELECTRONIC DESIGN, vol.41, no.7, 1 April 1993, HASBROUCK HEIGHTS, NEW JERSEY US pages 92 - 100 R. NASS 'Processor, chip set take computing to new heights'

## Description

### Background of the Invention

### 1. Field of the Invention

This invention is in the field of integrated circuits of the microprocessor type, and is more specifically directed to memory access circuitry in the same.

### 2. Description of Related Art

In the field of microprocessors, the number of instructions executed per second is a primary performance measure. As is well known in the art, many factors in the design and manufacture of a microprocessor impact this measure. For example, the execution rate depends quite strongly on the clock frequency of the microprocessor. The frequency of the clock applied to a microprocessor is limited, however, by power dissipation concerns and by the switching characteristics of the transistors in the microprocessor.

The architecture of the microprocessor is also a significant factor in the execution rate of a microprocessor. For example, many modern microprocessors utilize a "pipelined" architecture to improve their execution rate if many of their instructions require multiple clock cycles for execution. According to conventional pipelining techniques, each microprocessor instruction is segmented into several stages, and separate circuitry is provided to perform each stage of the instruction. The execution rate of the microprocessor is thus increased by overlapping the execution of different stages of multiple instructions in each clock cycle. In this way, one multiple-cycle instruction may be completed in each clock cycle.

An article by M Nakajima et al, entitled "OHMEGA: A VLSI Superscalar Processor Architecture for Numerical Applications" and published in Computer Architecture News, vol. 19, no. 3, May 1991 at pages 160-168, describes a processor incorporating a two-stage pipelining and a data cache with a four stage entry store buffer.

European patent application EP-A-0,422,690 describes a processor, for example a microprocessor. A write buffer in the processor receives instruction results. The write buffer includes a plurality of buffer entries. An external cache memory also has a plurality of memory locations. External control logic is provided.

By way of further background, some microprocessor architectures are of the "superscalar" type, where multiple instructions are issued in each clock cycle for execution in parallel. Assuming no dependencies among instructions, the increase in instruction throughput is proportional to the degree of scalability.

Another known technique for improving the execution rate of a microprocessor and the system in which it is implemented is the use of a cache memory. Conventional cache memories are small high-speed memories that store program and data from memory locations which are likely to be accessed in performing later instructions, as determined by a selection algorithm. Since the cache memory can be accessed in a reduced number of clock cycles (often a single cycle) relative to main system memory, the effective execution rate of a microprocessor utilizing a cache is much improved over a non-cache system. Many cache memories are located on the same integrated circuit chip as the microprocessor itself, providing further performance improvement

According to each of these architecture-related performance improvement techniques, certain events may occur that slow the microprocessor performance. For example, in both the pipelined and the superscalar architectures, multiple instructions may require access to the same internal circuitry at the same time, in which case one of the instructions will have to wait (i.e., "stall") until the priority instruction is serviced by the circuitry.

One type of such a conflict often occurs where one instruction requests a write to memory (including cache) at the same time that another instruction requests a read from the memory. If the instructions are serviced in a "first-come-first-served" basis, the later-arriving instruction will have to wait for the completion of a prior instruction until it is granted memory access. These and other stalls are, of course, detrimental to microprocessor performance.

It has been discovered that, for most instruction sequences (i.e., programs), reads from memory or cache are generally more time-critical than writes to memory or cache, especially where a large number of general-purpose registers are provided in the microprocessor architecture. This is because the instructions and input data are necessary at specific times in the execution of the program in order for the program to execute in an efficient manner; in contrast, since writes to memory are merely writing the result of the program execution, the actual time at which the writing occurs is not as critical since the execution of later instructions may not depend upon the result

By way of further background, write buffers have been provided in microprocessors, such write buffers are logically located between on-chip cache memory and the bus to main memory. These conventional post-cache write buffers receive data from the cache for a write-through or write-back operation; the contents of the post-cache write buffer are written to main memory under the control of the bus controller, at times when the bus becomes available.

By way of further background, many modern microprocessors can access memory locations using addresses that are not necessarily a modulo of the operand size. An example of a microprocessor type in which this is the case are those commonly referred to as being "X86" compatible. In these microprocessors, therefore, some memory writes may include bytes which are outside of the byte block containing the lowest byte address, such that multiple write cycles are required to accomplish the write operation. These writes are often referred to as "misaligned writes". Indeed, a significant fraction of memory writes may overlap byte-block boundaries in many microprocessors.

By way of further background, microprocessors including both an integer central processing unit and a floating point processing unit are well known. In such microprocessors, the data word width of the integer results may be smaller than that of the floating point unit; for example, integer data may be thirty-two bits wide while the floating point data may be sixty-four bits wide. Other processing circuitry, besides floating point units, may also provide data of wider width than that provided by the central processing unit

By way of further background, it is important in many microprocessor applications that writes from the central processing unit core to cache or memory be made in program order, meaning in the order of the instructions provided by the programmer, to ensure proper program operation. Methods for maintaining the operation of a single unit in program order are known, for example by provision of a circular buffer and counter. However, where more than one buffer or operation must be maintained in program order, however, the use of a single counter is inadequate.

By way of further background, it is well known for microprocessors of conventional architectures, such as those having so-called "X86" compatibility, to effect write operations of byte sizes smaller than the capacity of the internal data bus.

By way of further background, pipelined microprocessors are known to be vulnerable to certain hazards commonly referred to as data dependencies. In general, data dependencies arise when two instructions at different stages in the pipeline require access to the same register or memory location, as the pipeline may access the register or memory location for the later instruction (in program order) before the earlier instruction has written data thereto, which results in erroneous operation. Techniques for detecting such data dependencies in conventional pipelined microprocessors are known in the art, as described in Patterson and Hennessy, Computer Architecture: A Quantitative Approach (Morgan Kaufmann, 1990), pp. 257-78. According to conventional techniques, detection of a data dependency or hazard is handled by stalling the pipeline until the earlier instruction (in program order) is completed, after which the later instruction can be processed. Of course, pipeline stalls result in loss of performance for the microprocessor.

By way of further background, some pipelined architecture microprocessors operate according to speculative execution in order to maintain the pipeline full despite conditional branch or jump instructions being present in the program sequence. Speculative execution requires that predictive branching be performed, where the microprocessor predicts whether the conditional branch will be taken or not taken according to an algorithm; the predicted path is then executed in the pipeline. It is important that the results of speculative executed instructions not be written to memory or cache, because if the prediction is incorrect, it may be difficult or impossible to recover from the incorrectly performed memory write. Further, another type of situation can occur where instructions are processed in a pipeline, including writes to memory, where an earlier instruction has an exception condition (e.g., divide-by-zero) for which the program execution should be immediately stopped.

### Summary of the Invention

In accordance with one aspect of the invention, there is provided a microprocessor comprising: central processing means for processing data according to operations defined by instructions to be executed in a program order; a write buffer coupled to the central processing means for receiving instruction results, the write buffer including a plurality of buffer entries, each write buffer entry being arranged in first and second sections; a cache memory that has a plurality of memory locations and is coupled to the write buffer for receiving data therefrom, and to the central processing means for presenting data thereto; a bus (DATA, ADS) coupled to the central processing means, the write buffer, and the cache memory; and control logic means for controlling the write buffer so that instruction results stored therein are presented to the cache memory in program order, wherein: each buffer entry in said first and second sections includes a plurality of cross-dependency bits (XDEP), each cross-dependency bit corresponding to one of the buffer entries in the respective second and first sections and indicating, when set, that the corresponding buffer entry was allocated in advance thereof and its contents have not yet been presented to said cache; and said control logic means is operable to present the data of each write buffer entry to said cache only when its cross-dependency control bits (XDEP) are clear.

The logical location of the write buffer between the core of the microprocessor and the memory, whereby each write to memory is directed to the write buffer rather than to a memory bus or cache memory is advantageous in that the conetnts of the write buffer can then be written into cache memory or main memory in an asynchronous manner, when the memory bus or cache memory is available.

In accordance with another aspect of the invention, there is provided a method of buffering results of data processing operations executed by a microprocessor central processing unit according to a series of instructions in a program order, comprising: (a) for each of a plurality of instructions, determining a physical address to which instruction results are to be written, and for each such physical address, storing the determined physical address into one of a plurality of write buffer entries, each write buffer entry being arranged in first and second sections; (b) executing the instructions; (c) storing the executed instruction results into the write buffer entries in which are stored the corresponding physical addresses for the respective instructions; and (d) retrieving, in the program order, the stored results from the write buffer entries, for storage in the cache memory at a location associated with the stored memory address; wherein: each buffer entry in said first and second sections includes a plurality of cross-dependency bits (XDEP), each cross-dependency bit corresponding to one of the buffer entries in the respective second and first sections and indicating, when set, that the corresponding buffer entry was allocated in advance thereof and its contents have not yet been presented to said cache; and the data of each write buffer entry is retrieved from the write buffer entries only when its cross-dependency control bits (XDEP) are clear.

An embodiment of the invention includes misaligned write handling capability. If a misaligned write is detected, a second write buffer entry is allocated with the first write entry buffer entry, and a higher order address is calculated and stored therein. Upon retiring of the misaligned write, the data stored in the first write buffer entry is shifted into the proper byte lanes so that the lower order bytes are at the higher order end and vice versa. A latch is provided for storage of the shifted data after retiring of the first entry and the lower order data. The latch presents the higher order data with the address for the second entry, completing the misaligned write.

An embodiment of the invention can include buffering extra wide data without requiring the entire write buffer to be constructed with the extra width. A secondary processing unit, such as a floating point unit, may produce results in words that are wider (in bits) than the width of words produced by the central processing unit A secondary data latch is provided to store the results of the secondary processing unit, with a control bit being set when the data therein is valid. A standard write buffer entry is allocated with the physical address corresponding to the results of the secondary processing unit, with a control bit being set to indicate that its data will be stored in the secondary data latch. Upon retiring of the write buffer entry, the contents of the secondary data latch rather than the contents of the write buffer entry will be presented to the cache.

An embodiment of the invention can ensure that the writing of data from the write buffer is in program order in the case where the write buffer is split into two sections for layout or operational efficiency. Program order is maintained by including a cross-dependency field in the write buffer entries that is loaded upon allocation of each write buffer entry with a map showing which write buffer entries in the opposite section have already been allocated. The cross-dependency fields in each write buffer entry are cleared, bit by bit, as each write buffer earlier in program order is retired. Retiring of a write buffer entry in program order is ensured by requiring its cross-dependency field to be clear. Additionally, a similar concept may be used to ensure the performance of non-cacheable reads in program order with retiring from a write buffer, by providing a cross-dependency field for the read that is a map of the allocated write buffer entries at the time the read is allocated, with gating of the operations in similar fashion.

An embodiment of the invention can include provisions for performing gathered writes from the write buffer to the cache. During allocation of the write buffer entries, comparisons are made between the physical address of currently allocated entry and previously allocated to determine if, at least, the physical addresses allocated are within the same byte group, in which case the multiple writes may be gatherable, or mergeable, into a single write operation to the cache. Other constraints on gatherability can include that the bytes are contiguous with one another, and that the writes are from adjacent write instructions in program order. Retiring of gatherable write buffer entries is effected by loading a latch with the data from the write buffer entries, after shifting of the data to place it in the proper byte lanes; the write is effected by presentation of the address in combination with the contents of the latch.

An embodiment of the invention can include provisions for detecting data hazards or dependencies such as read-after-write (RAW) dependencies, particularly relative to data already written to the write buffers. Retiring of write buffer contents is prevented for those entries subject to a RAW dependency, thus avoiding erroneous reads. Capability may also be provided for sourcing data directly from the write buffer, or even bypassing the write buffer, to reduce the effect of pipeline stalls due to RAW hazards. Further capability may also be provided so that only the last of multiple reads may be sourced to the core. Write-after-read control may also be provided to avoid false RAW hazard detection.

An embodiment of the invention can include a speculative execution field of control bits for each write buffer entry, where writes to the write buffer during speculative execution are allowed. Each control bit corresponds to a predictive or speculative branch, and is set upon allocation of a write buffer entry according to the degree of speculation of the write. In the event of a misprediction, each write buffer entry having its speculative control bit set for the failing prediction is flushed, so that the write buffer entry becomes available for re-allocation. Exception handling may be accomplished by clearing all write buffer entries that have been allocated but are not yet retired at the time of the exception. A no-op bit is provided for each write buffer entry to allow the retire pointers and allocation pointers to match when the buffer is empty.

An embodiment of the invention can provide a microprocessor architecture which buffers the writing of data from the CPU core into a write buffer, prior to retiring of the data to a cache, and in which misaligned writes may be easily handled with minimal loss of performance.

An embodiment of the invention can provide a microprocessor architecture which allows for storage of execution results in a write buffer prior to retiring data to cache or memory, where the write buffer has a plurality of locations of a smaller bit width than that provided by a secondary processing unit.

An embodiment of the invention can provide such an architecture where buffering is provided for the results of the secondary processing unit without requiring all write buffer locations to be constructed to accommodate the extra bit width.

An embodiment of the invention can provide a microprocessor architecture which buffers the writing of data from the CPU core into a write buffer, prior to retiring of the data to a cache, where the write buffer is split into two sections.

An embodiment of the invention can provide such an architecture which ensures the retiring of data from the write buffer to cache or main memory in program order.

An embodiment of the invention can provide such an architecture which allows for the performing of non-cacheable reads in program order with the retiring of data from the write buffer

An embodiment of the invention can provide a microprocessor architecture which allows for storage of execution results in a write buffer prior to retiring data to cache or memory, and for which the capability is provided to store the write data from multiple write operations for presentation from the write buffer to the cache in a single cycle.

An embodiment of the invention can provide for detection of gatherable, or mergeable, write operations to enable the gathered write to the cache from the write buffer.

An embodiment of the invention can provide a microprocessor architecture which allows for storage of execution results in a write buffer prior to retiring data to cache or memory in a manner in which data dependencies may be detected.

An embodiment of the invention can provide for allocation of write buffer locations with an indication that an otherwise apparent data dependency is in fact not a data dependency.

An embodiment of the invention can provide such an architecture which is implemented in a superpipelined superscalar microprocessor architecture.

An embodiment of the invention can provide a microprocessor architecture which buffers the writing of data from the CPU core into a write buffer, prior to retiring of the data to a cache, and in which recovery from speculative execution or exceptions can be readily performed.

Other objects and advantages of the present invention will be apparent to those of ordinary skill in the art having reference to the following description of exemplary embodiments in combination with the drawings.

### Brief Description of the Drawings

Figure 1a illustrates a block diagram of the overall microprocessor..

Figure 1b illustrates a generalized block diagram of the instruction pipeline stages.

Figure 2 illustrates a block diagram of a processor system using the microprocessor.

Figure 3 illustrates a timing diagram showing the flow of instructions through the pipeline stages.

Figure 4 is an electrical diagram, in block form, of the write buffer in the microprocessor of Figure 1a according to the preferred embodiment of the invention.

Figure 5 is a representation of the contents of one of the entries in the write buffer of Figure 4.

Figure 6 is a flow chart illustrating the allocation of a write buffer entry during the address calculation stage AC2 of the pipeline of Figure 1b.

Figure 7 is a representation of the physical address comparison process in the allocation of Figure 6.

Figure 8 is a map of the address valid bits of the cross-dependency field for a write buffer entry for one pipeline of the microprocessor of Figure 1a relative to the address valid bits of the write buffer entries for the other pipeline of the microprocessor of Figure 1a.

Figure 9 is a flow chart illustrating the issuing of a write buffer entry in an embodiment of the invention.

Figure 10 is a flow chart illustrating the retiring of a write buffer entry in an embodiment of the invention.

Figure 11 is a flow chart illustrating a method for detecting and handling dependency hazards in an embodiment of the invention.

Figures 12a and 12b are flow charts illustrating a method for processing speculative execution and speculation faults in an embodiment of the invention.

Figure 13 is a flow chart illustrating a method for handling exceptions in an embodiment of the invention.

Figure 14 is a flow chart illustrating a method for allocating write buffer locations for misaligned write operations, in an embodiment of the invention.

Figure 15 is a flow chart illustrating a sequence for retiring write buffer locations for misaligned write operations, in an embodiment of the invention.

Figure 16 is a flow chart illustrating a sequence for retiring write buffer locations for gathered write operations, in an embodiment of the invention.

Figure 17 is a representation of a non-cacheable read cross-dependency field as used in the microprocessor of Figure 1a in an embodiment of the invention.

Figures 18a and 18b are flow charts illustrating the allocation and retiring sequences, respectively, of a non-cacheable read operation in an embodiment of the invention.

### Detailed Description of the Preferred Embodiment

The detailed description of an exemplary embodiment of the microprocessor of the present invention is organized as follows:
1. Exemplary processor system
2. Generalized pipeline architecture
3. Write buffer architecture and operation
4. Read-after-write hazard detection and write buffer operation
5. Speculative execution and exception handling
6. Special write cycles from the write buffer
7. Conclusion

This organizational table and the corresponding headings used in this detailed description, are provided for the convenience of reference only. Detailed description of conventional or known aspects of the microprocessor are omitted as to not obscure the description of the invention with unnecessary detail.

### 1. Exemplary Processor System

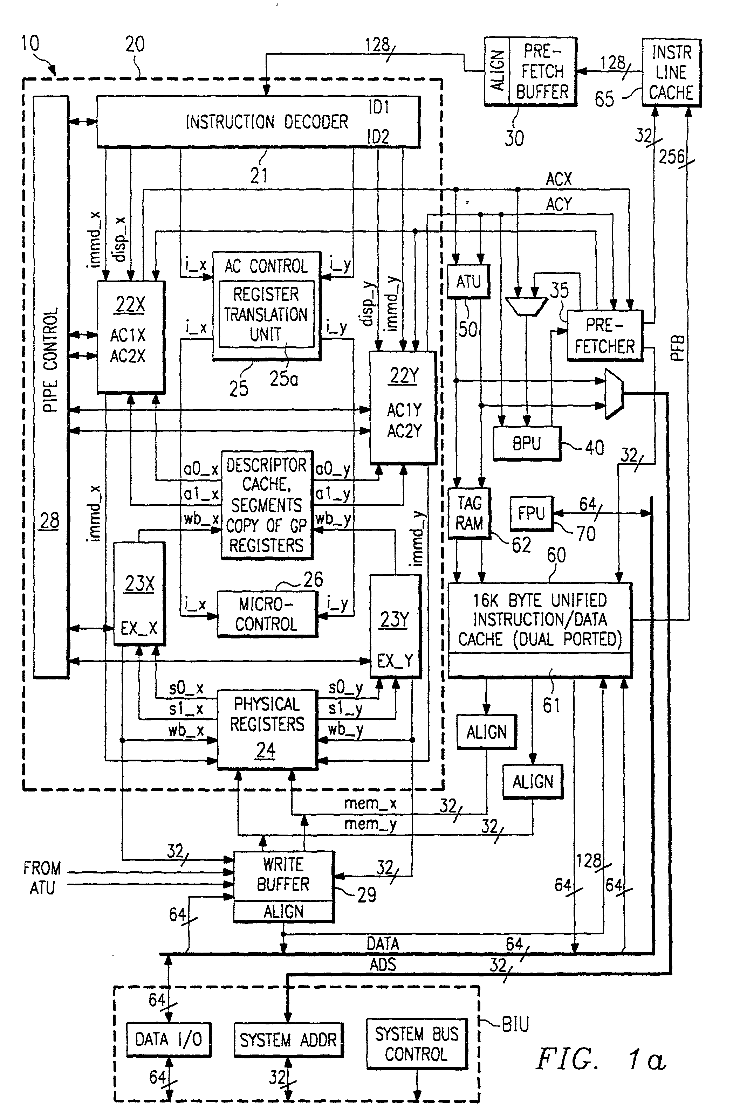

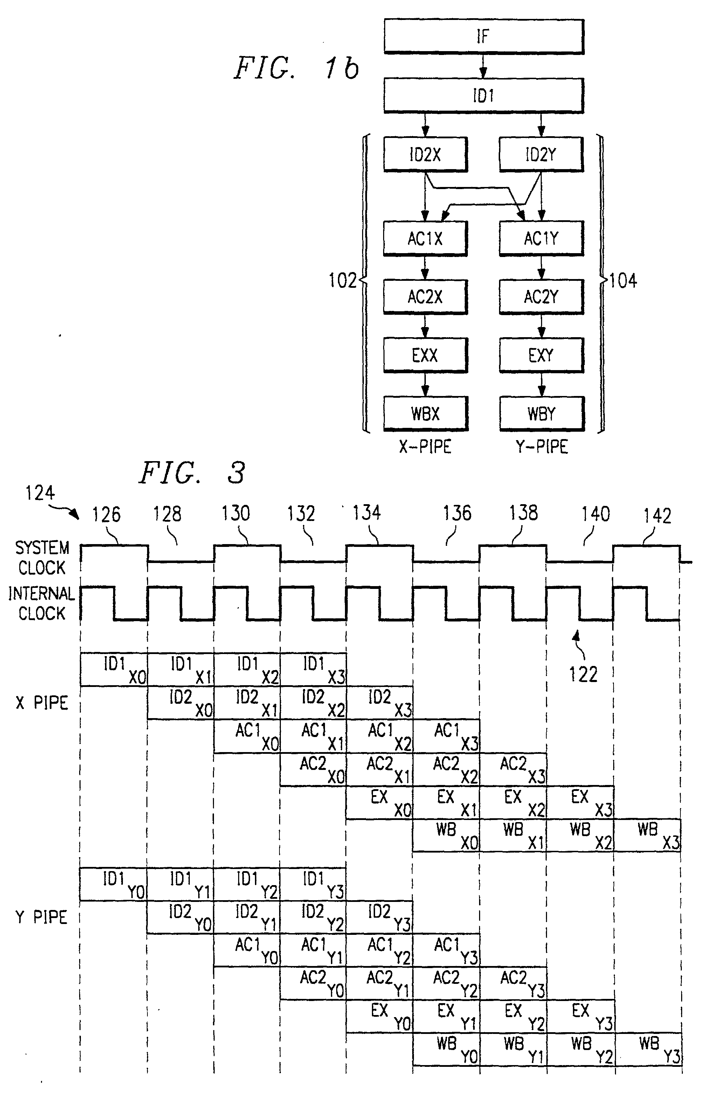

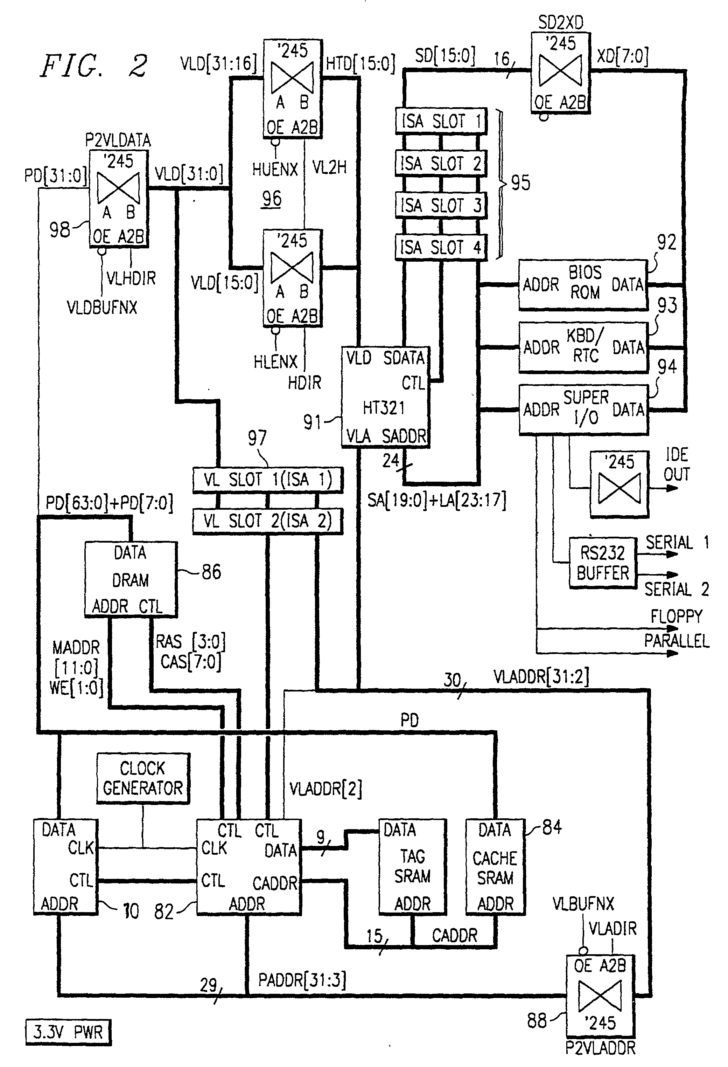

The exemplary processor system is shown in Figures 1a, 1b, and Figure 2. Figures 1a and 1b respectively illustrate the basic functional blocks of the exemplary superscalar, superpipelined microprocessor along with the pipe stages of the two execution pipelines. Figure 2 illustrates an exemplary processor system (motherboard) design using the microprocessor.

### 1.1 Microprocessor

Referring to Figure 1a, the major sub-blocks of a microprocessor 10 include: (a) central processing unit (CPU) core 20, (b) prefetch buffer 30 (c) prefetcher 35, (d) branch processing unit (BPU) 40, (e) address translation unit (ATU) 50, and (f) unified 16 Kbyte code/data cache 60, including TAG RAM 62. A 256 byte instruction line cache 65 provides a primary instruction cache to reduce instruction fetches to the unified cache, which operates as a secondary instruction cache. An onboard floating point unit (FPU) 70 executes floating point instructions issued to it by the CPU core 20.

The microprocessor uses internal 32-bit address and 64-bit data buses ADS and DATA. A 256 bit (32 byte) prefetch bus (PFB), corresponding to the 32 byte line size of the unified cache 60 and the instruction line cache 65, allows a full line of 32 instruction bytes to be transferred to the instruction line cache in a single clock. Interface to external 32 bit address and 64 bit data buses is through a bus interface unit (BIU).

The CPU core 20 is a superscalar design with two execution pipes X and Y. It includes an instruction decoder 21, address calculation units 22X and 22Y, execution units 23X and 23Y, and a register file 24 with 32 32-bit registers. An AC control unit 25 includes a register translation unit 25a with a register scoreboard and register renaming hardware. A microcontrol unit 26, including a microsequencer and microROM, provides execution control.

Writes from CPU core 20 are queued into twelve 32 bit write buffers 29 ― write buffer allocation is performed by the AC control unit 25. These write buffers provide an interface for writes to the unified cache 60 -- noncacheable writes go directly from the write buffers to external memory. The write buffer logic supports optional read sourcing and write gathering.

A pipe control unit 28 controls instruction flow through the execution pipes, including: keeping the instructions in order until it is determined that an instruction will not cause an exception; squashing bubbles in the instruction stream; and flushing the execution pipes behind branches that are mispredicted and instructions that cause an exception. For each stage, the pipe control unit keeps track of which execution pipe contains the earliest instruction, provides a "stall" output and receives a "delay" input.

BPU 40 predicts the direction of branches (taken or not taken), and provides target addresses for predicted taken branches and unconditional change of flow instructions (jumps, calls, returns). In addition, it monitors speculative execution in the case of branches and floating point instructions, i.e., the execution of instructions speculatively issued after branches which may turn out to be mispredicted, and floating point instructions issued to the FPU 70 which may fault after the speculatively issued instructions have completed execution. If a floating point instruction faults, or if a branch is mispredicted (which will not be known until the EX or WB stage for the branch), then the execution pipeline must be repaired to the point of the faulting or mispredicted instruction (i.e., the execution pipeline is flushed behind that instruction), and instruction fetch restarted.

Pipeline repair is accomplished by creating checkpoints of the processor state at each pipe stage as a floating point or predicted branch instruction enters that stage. For these checkpointed instructions, all resources (programmer visible registers, instruction pointer, condition code register) that can be modified by succeeding speculatively issued instructions are checkpointed. If a checkpointed floating point instruction faults or a checkpointed branch is mispredicted, the execution pipeline is flushed behind the checkpointed instruction -- for floating point instructions, this will typically mean flushing the entire execution pipeline, while for a mispredicted branch there may be a paired instruction in EX and two instructions in WB that would be allowed to complete.

For the exemplary microprocessor 10, the principle constraints on the degree of speculation are: (a) speculative execution is allowed for only up to four floating point or branch instructions at a time (i.e., the speculation level is maximum 4), and (b) a write or floating point store will not complete to the cache or external memory until the associated branch or floating point instruction has been resolved (i.e., the prediction is correct, or floating point instruction does not fault).

The unified cache 60 is 4-way set associative (with a 4k set size), using a pseudo-LRU replacement algorithm, with write-through and write-back modes. It is dual ported (through banking) to permit two memory accesses (data read, instruction fetch, or data write) per clock. The instruction line cache is a fully associative, lookaside implementation (relative to the unified cache), using an LRU replacement algorithm.

The FPU 70 includes a load/store stage with 4-deep load and store queues, a conversion stage (32-bit to 80-bit extended format), and an execution stage. Loads are controlled by the CPU core 20, and cacheable stores are directed through the write buffers 29 (i.e., a write buffer is allocated for each floating point store operation).

Referring to Figure 1b, the microprocessor has seven-stage X and Y execution pipelines: instruction fetch (IF), two instruction decode stages (ID1, ID2), two address calculation stages (AC1, AC2), execution (EX), and write-back (WB). Note that the complex ID and AC pipe stages are superpipelined.

The IF stage provides a continuous code stream into the CPU core 20. The prefetcher 35 fetches 16 bytes of instruction data into the prefetch buffer 30 from either the (primary) instruction line cache 65 or the (secondary) unified cache 60. BPU 40 is accessed with the prefetch address, and supplies target addresses to the prefetcher for predicted changes of flow, allowing the prefetcher to shift to a new code stream in one clock.

The decode stages ID1 and ID2 decode the variable length X86 instruction set. The instruction decoder 21 retrieves 16 bytes of instruction data from the prefetch buffer 30 each clock. In ID1, the length of two instructions is decoded (one each for the X and Y execution pipes) to obtain the X and Y instruction pointers -- a corresponding X and Y bytes-used signal is sent back to the prefetch buffer (which then increments for the next 16 byte transfer). Also in ID1, certain instruction types are determined, such as changes of flow, and immediate and/or displacement operands are separated. The ID2 stage completes decoding the X and Y instructions, generating entry points for the microROM and decoding addressing modes and register fields.

During the ID stages, the optimum pipe for executing an instruction is determined, and the instruction is issued into that pipe. Pipe switching allows instructions to be switched from ID2X to AC1Y, and from ID2Y to AC1X. For the exemplary embodiment, certain instructions are issued only into the X pipeline: change of flow instructions, floating point instructions, and exclusive instructions. Exclusive instructions include: any instruction that may fault in the EX pipe stage and certain types of instructions such as protected mode segment loads, string instructions, special register access (control, debug, test), Multiply/Divide, Input/Output, Push All/Pop All (PUSH/POPA), and task switch. Exclusive instructions are able to use the resources of both pipes because they are issued alone from the ID stage (i.e., they are not paired with any other instruction). Except for these issue constraints, any instructions can be paired and issued into either the X or Y pipe.

The address calculation stages AC1 and AC2 calculate addresses for memory references and supply memory operands. The AC1 stage calculates two 32 bit linear (three operand) addresses per clock (four operand addresses, which are relatively infrequent, take two clocks). Data dependencies are also checked and resolved using the register translation unit 25a (register scoreboard and register renaming hardware) -- the 32 physical registers 24 are used to map the 8 general purpose programmer visible logical registers defined in the X86 architecture (EAX, EBX, ECX, EDX, EDI, ESI, EBP, ESP).

The AC unit includes eight architectural (logical) registers (representing the X86 defined register set) that are used by the AC unit to avoid the delay required to access in AC1 the register translation unit before accessing register operands for address calculation. For instructions that require address calculations, AC1 waits until the required data in the architectural registers is valid (no read after write dependencies) before accessing those registers. During the AC2 stage, the register file 24 and the unified cache 60 are accessed with the physical address (for cache hits, cache access time for the dual ported unified cache is the same as that of a register, effectively extending the register set) -- the physical address is either the linear address, or if address translation is enabled, a translated address generated by the ATU 50.

Translated addresses are generated by the ATU 50 from the linear address using information from page tables in memory and workspace control registers on chip. The unified cache is virtually indexed and physically tagged to permit, when address translation is enabled, set selection with the untranslated address (available at the end of AC1) and, for each set, tag comparison with the translated address from the ATU 50 (available early in AC2). Checks for any segmentation and/or address translation violations are also performed in AC2.

Instructions are kept in program order until it is determined that they will not cause an exception. For most instructions, this determination is made during or before AC2 -- floating point instructions and certain exclusive instructions may cause exceptions during execution. Instructions are passed in order from AC2 to EX (or in the case of floating point instructions, to the FPU 70) -- because integer instructions that may still cause an exception in EX are designated exclusive, and therefore are issued alone into both execution pipes, handling exceptions in order is ensured.

The execution stages EXX and EXY perform the operations defined by the instruction. Instructions spend a variable number of clocks in EX, i.e., they are allowed to execute out of order (out of order completion). Both EX stages include adder, logical, and shifter functional units, and in addition, the EXX stage contains multiply/divide hardware.

The WB stage updates the register file 24, condition codes, and other parts of the machine state with the results of the previously executed instruction. The register file is written in Phase 1 (PH1) of WB and read in Phase 2 (PH2) of AC2.

### 1.2 System

Referring to Figure 2, for the exemplary embodiment, microprocessor 10 is used in a processor system that includes a single chip memory and bus controller 82. The memory/bus controller 82 provides the interface between the microprocessor and the external memory subsystem -- level two cache 84 and main memory 86 -- controlling data movement over the 64 bit processor data bus (PD) (the data path is external to the controller which reduces its pin count and cost).

Controller 82 interfaces directly to the 32-bit address bus PADDR, and includes a one bit wide data port (not shown) for reading and writing registers within the controller. A bi-directional isolation buffer 88 provides an address interface between microprocessor 10 and VL and ISA buses.

Controller 82 provides control for the VL and ISA bus interface. A VL/ISA interface chip 91 (such as an HT321) provides standard interfaces to a 32 bit VL bus and a 16 bit ISA bus. The ISA bus interfaces to BIOS 92, keyboard controller 93, and I/O chip 94, as well as standard ISA slots 95. The interface chip 91 interfaces to the 32 bit VL bus through a bi-directional 32/16 multiplexer 96 formed by dual high/low word [31:16]/[15:0] isolation buffers. The VL bus interfaces to standard VL slots 97, and through a bi-directional isolation buffer 98 to the low double word [31:0] of the 64 bit processor data bus.

### 2. Generalized pipeline architecture

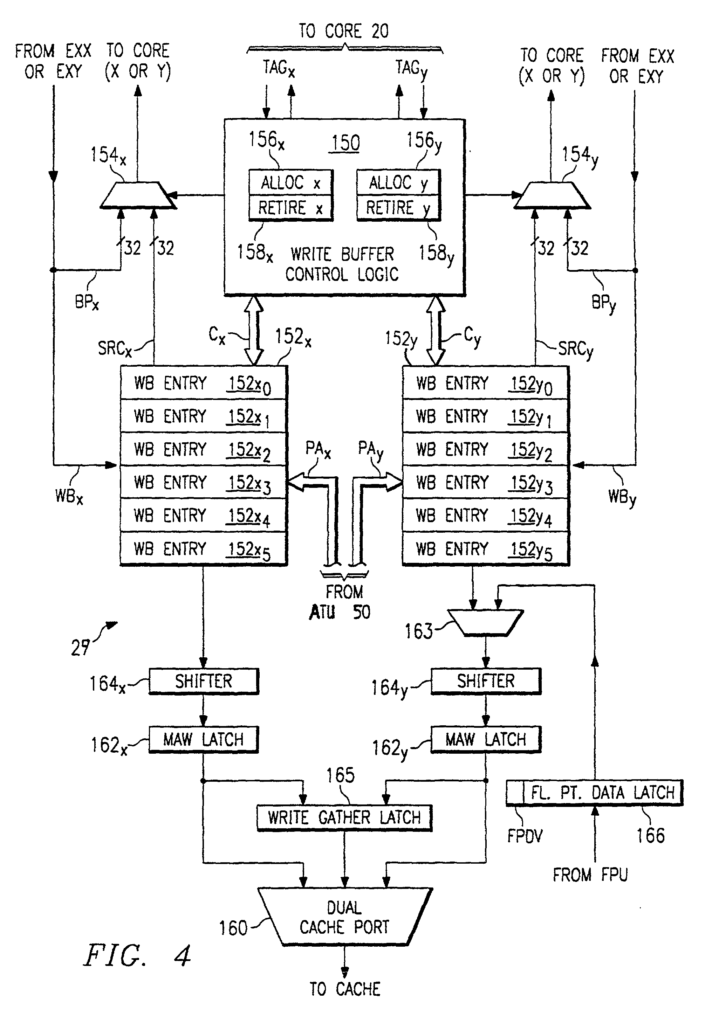

Figure 3 illustrates an example of the performance of four instructions per pipeline, showing the overlapping execution of the instructions, for a two pipeline architecture. Additional pipelines and additional stages for each pipeline could also be provided. In the preferred embodiment, the internal operation of microprocessor 10 is synchronous with internal clock signal 122 at a frequency that is a multiple of that of external system clock signal 124. In Figure 3, internal clock signal 122 is at twice the frequency of system clock signal 124. During first internal clock cycle 126, first stage instruction decode stages ID1 operate on respective instructions X0 and Y0. During second internal clock cycle 128, instructions X0 and Y0 have proceeded to second stage instruction decode stages ID2, and new instructions X1 and Y1 are in first stage instruction decode units ID1. During third internal clock cycle 130, instructions X2, Y2 are in first stage decode stages ID1, instructions X1, Y1 are in second stage instruction decode stages ID2, and instructions X0, Y0 are in first address calculation units AC1. During internal clock cycle 132, instructions X3, Y3 are in first stage instruction decode stages ID1, instructions X2, Y2 are in second stage instruction decode stages ID2, instructions X1, Y1 are in the first address calculation stages AC1, and instructions X0 and Y0 are in second address calculation stages AC2.

As is evident from this description, successive instructions continue to flow sequentially through the stages of the X and Y pipelines. As shown in clock cycles 134, 140, the execution portion of each instruction is performed on sequential clock cycles. This is a major advantage of a pipelined architecture, in that the number of instructions completed per clock is increased, without reducing the execution time of an individual instruction. Consequently a greater instruction throughput is achieved with greater demands on the speed of the hardware.

The instruction flow shown in Figure 3 is the optimum case. As shown, no stage requires more than one clock cycle. In an actual machine though, one or more stages may require additional clock cycles to complete thereby changing the flow of instructions through the other pipe stages. Furthermore, the flow of instructions through one pipeline may be dependent upon the flow of instructions through the other pipeline.

### 3. Write buffer architecture and operation

As shown in Figure 1a, write buffer 29 is logically located at the output of core 20, and is operatively connected to core 20 by writeback buses WB_x, WB_y to receive data therefrom. Write buffer 29 is also operatively connected to ATU 50 to receive physical addresses therefrom via address buses PAx, Pay (Fig. 4). The output of write buffer 29 is presented to unified cache 60 by way of dual cache port 160, and is also presented to memory data bus DATA. Cache port 160 presents data, address and control lines to unified cache 60 in the conventional manner; according to the preferred embodiment of the invention, the number of lines between cache port 160 and unified cache 60 is sufficient to suppoit two simultaneous write requests.

As will be made further apparent hereinbelow, the function of write buffer 29 is to receive address and data information from core 20 that are to be written to memory, rather than to one of the registers in register file 24; the address and data information stored in write buffer 29 can then be later written to memory at such time as the cache and memory subsystems are not otherwise busy in a higher priority operation. As a result, write buffer 29 allows for core 20 to rapidly perform a memory write operation (from its viewpoint) and go on to the next instruction in the pipeline, without disrupting memory read operations and without requiring wait states on the part of core 20 to accomplish the memory write. Further, the memory write operation performed by core 20 to write buffer 29 requires the same write cycle time, regardless of whether the memory location is in unified cache 60 or in main memory 86.

Referring now to Figure 4, the detailed construction and operation of write buffer 29 according to the preferred embodiment of the invention will now be described. It is to be understood that the example of write buffer 29 described hereinbelow, while especially advantageous in the superpipelined superscalar architecture of microprocessor 10, can also provide significant performance and other advantages when utilized in microprocessors of different architecture.

According to the preferred embodiment of the invention, write buffer 29 contains twelve entries 152x₀ through 152x₅, 152y₀ through 152y₅, organized into two sections 152x, 152y. This split organization of write buffer 29 in this example is preferred for purposes of layout and communication efficiency with the superscalar architecture of microprocessor 10, with write buffer sections 152x, 152y associated with the X and Y pipelines, respectively, of core 20. Alternatively, write buffer 29 could be organized as a single bank, with each entry accessible by either of the X and Y pipelines of core 20.

Write buffer 29 further includes write buffer control logic 150, which is combinatorial or sequential logic specifically designed to control write buffer 29 and its interface with core 20 in the manner described herein. It is contemplated that one of ordinary skill in the art having reference to this specification will be readily able to realize logic for performing these functions, and as such write buffer control logic 150 is shown in Figure 4 in block form.

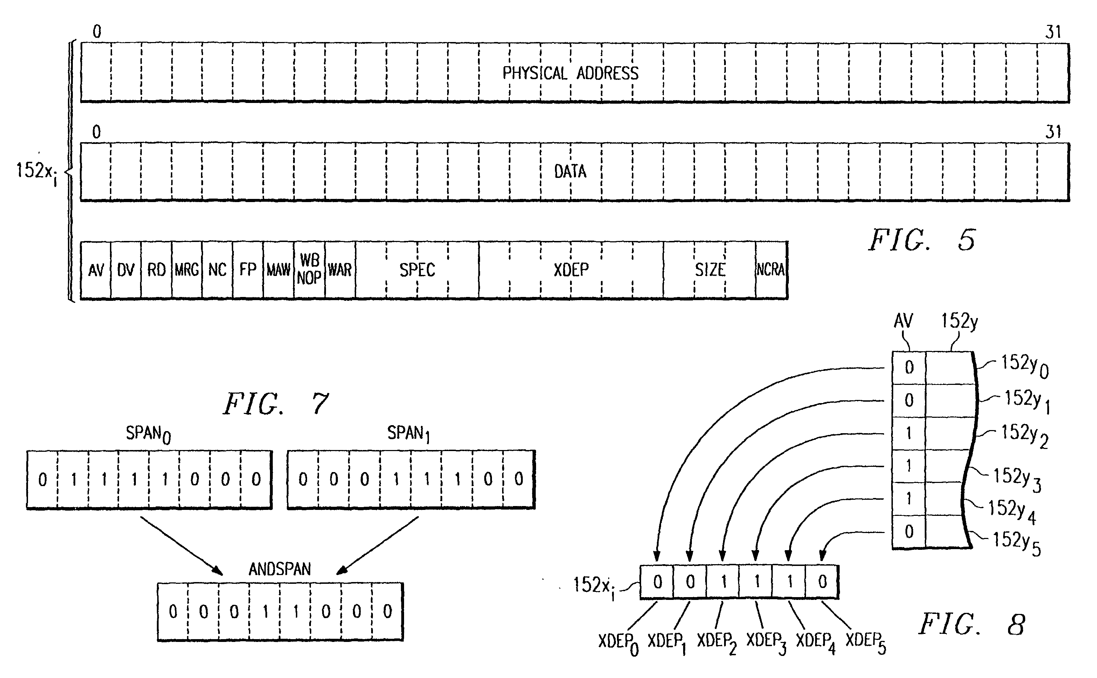

Referring now to Figure 5, the contents of a single entry 152xᵢ in write buffer section 152x will now be described; it is to be understood, of course, that each entry 152yᵢ of write buffer section 152y will be similarly constructed according to this preferred embodiment of the invention. Each entry 152xᵢ contains an address portion, a data portion, and a control portion. In addition, each entry 152 is identified by a four bit tag value (not shown), as four bits are sufficient to uniquely identify each of the twelve entries 152 in write buffer 29. The tag is used by core 20 to address a specific entry 152 so as to write data thereto (or source data therefrom) during the EX stage and WB stage of the pipeline. By use of the four-bit tag, core 20 does not need to maintain the physical memory address of the write through the remainder of the pipeline.

For the thirty-two bit integer architecture of microprocessor 10, each entry 152xᵢ includes thirty-two bits for the storage of a physical memory address (received from ATU 50 via physical address bus PAx), and thirty-two bits for storage of a four-byte data word. Also according to this preferred embodiment of the invention, each entry 152xᵢ further includes twenty-three various control bits, defined as noted below in Table A. These control bits are utilized by write buffer control logic 150 to control the allocation and issuing of entries 152. In addition, other portions of microprocessor 10, such as control logic in unified cache 60, are also able to access these control bits as necessary to perform their particular functions. The specific function of each control bit will be described in detail hereinbelow relative to the operation of write buffer 29.

**Table A**

| | |
|---|---|
| AV | address valid; the entry contains a valid address |
| DV | data valid; the entry contains valid data |
| RD | readable; the entry is the last write in the pipeline to its physical address |
| MRG | mergeable; the entry is contiguous and non-overlapping to the preceding write buffer entry |
| NC | non-cacheable write |
| FP | the entry corresponds to floating point data |
| MAW | misaligned write |
| WBNOP | write buffer no-op |
| WAR | write-after-read; the entry is a write occurring later in program order than a simultaneous read in the other pipeline |
| SPEC | four bit field indicating the order of speculation for the entry |
| XDEP | cross-dependency map of write buffer section 152y |
| SIZE | size, in number of bytes, of data to be written |
| NCRA | non-cacheable read has been previously allocated |

Write buffer section 152x receives the results of either execution stage EXX of the X pipeline or execution stage EXY of the Y pipeline via writeback bus WB_x driven by core 20; similarly, write buffer section 152y receives the results of either execution stage EXX of the X pipeline or execution stage EXY of the Y pipeline via writeback bus WB_y.

Write buffer sections 152x, 152y present their contents (both address and data sections) to cache port 160, for example, via circuitry for properly formatting the data. As shown in Figure 4, write buffer section 152x presents its data to barrel shifter 164x, which in turn presents its output to misaligned write latch 162x. As will be described in further detail hereinbelow, misaligned write latch 162x allows for storage of the data from write buffer section 152x for a second write to cache port 160, which is performed according to the present invention in the event that write to memory overlaps an eight-byte boundary. Misaligned write latch 162x presents its output directly to cache port 160, and also to write gather latch 165; write gather latch 165, as will be described in further detail hereinbelow, serves to gather data from multiple write buffer entries 152 for a single write to cache port 160, in the event that the physical addresses of the multiple writes are in the same eight-byte group.

Write buffer section 152y presents its output to one input of multiplexer 163, which receives the output of floating point data latch 166 at its other input; as will be described hereinbelow, floating point data latch 166 contains the output from the FPU 70, and provides sixty-four bit floating point data storage for a memory write corresponding to one of write buffer entries 152. Multiplexer 163 is controlled by write buffer control logic 150 and by the cache control logic for unified cache 60, to select the appropriate input for presentation at its output, as will be described hereinbelow. The output of multiplexer 163 is presented to shifter 164y, and in turn to misaligned write latch 162y, in similar manner as is the output of write buffer section 152x described above. The output of misaligned write latch 162y is also similarly connected directly to cache port 160 and also to write gather latch 165.

While only a single cache port 160 is schematically illustrated in Figure 4 for simplicity of explanation, as described hereinabove, cache port 160 according to this embodiment of the invention is a dual cache port, enabling presentation of two write requests simultaneously. In addition, write buffer 29 also communicates data directly to data bus DATA. As such, according to this embodiment of the invention, the connections to cache port 160 shown in Figure 4 will be duplicated to provide the second simultaneous write to cache port 160, and will also be provided directly to data bus DATA to effect a memory write in the event that cache control requires a write to main memory 86.

Also according to the preferred embodiment of the invention, write buffer 29 is capable of sourcing data directly from its entries 152 to core 20 by way of source buses SRCx, SRCy, under the control of write buffer control logic 150 which controls multiplexers 154x, 154y. The output of multiplexer 154x may be applied to either of the X or Y pipelines, under the control of pipeline control 28, via buses mem_x, mem_y to physical registers 24; similarly, the output of multiplexer 154y may be applied to either of the X or Y pipelines via buses mem_x, mem_y. In addition, writeback buses WB_x, WB_y are also connected to multiplexers 154x, 154y via bypass buses BP_x, BP_y, respectively, so that memory bypassing of write buffer 29 is facilitated as will be described hereinbelow.

As noted above, microprocessor 10 includes an on-chip FPU 70 for performing floating point operations. As noted above, the results of calculations performed by the FPU 70 are represented by sixty-four bit data words. According to this preferred embodiment of the invention, efficiency is obtained by limiting the data portions of write buffer entries 152 to thirty-two bits, and by providing sixty-four bit floating point data latch 166 for receiving data from the FPU 70. Floating point data latch 166 further includes a floating point data valid (FPDV) control bit which indicates, when set, that the contents of floating point data latch 166 contain valid data. The address portion of one of write buffer entries 152 will contain the memory address to which the results from the FPU 70, stored in floating point data latch 166, are to be written; this write buffer entry 152 will have its FP control bit set, indicating that its data portion will not contain valid data, but that its corresponding data will instead be present in floating point data latch 166.

Alternatively, of course, floating point data write buffering could be obtained by providing a sixty-four bit data portion for each write buffer entry 152. According to this embodiment of the invention, however, pre-cache write buffering of sixty-four bit floating point data is provided but with significant layout and chip area inefficiency. This inefficiency is obtained by not requiring each write buffer entry 152 to have a sixty-four bit data portion; instead, floating point data latch 166 provides sixty-four bit capability for each of entry 152 in write buffer 29. It is contemplated that, for most applications, the frequency at which floating point data is provided by the FPU 70 is on the same order at which the floating point data will be retired from floating point data latch 166 (i.e., written to cache or to memory). This allows the single floating point data latch 166 shown in Figure 4 to provide adequate buffering. Of course, in the alternative, multiple floating point data latches 166 could be provided in microprocessor 10 if additional buffering is desired.

The operation of write buffer 29 according to the preferred embodiment of the invention will now be described in detail. This operation is under the control of write buffer control logic 150, which is combinatorial or sequential logic arranged so as to perform the functions described hereinbelow. As noted above, it is contemplated that one of ordinary skill in the art will be readily able to implement such logic to accomplish the functionality of write buffer control logic 150 based on the following description.

Specifically, according to this embodiment of the invention, write buffer control logic 150 includes X and Y allocation pointers 156x, 156y, respectively, and X and Y retire pointers 158x, 158y, respectively; pointers 156, 158 will keep track of the entries 152 in write buffer 29 next to be allocated or retired, respectively. Accordingly, sections 152x, 152y of write buffer 29 each operate as a circular buffer for purposes of allocation and retiring, and as a file of addressable registers for purposes of issuing data. Alternatively, write buffer 29 may be implemented as a fully associative primary data cache, if desired.

In general, upon second address calculation stages AC2 determining that a memory write will be performed during the execution of an instruction, one of write buffer entries 152 will be "allocated" at such time as the physical address is calculated in this stage, such that the physical address is stored in the address portion of an entry 152 and its address valid control bit (AV) and other appropriate control bits are set After execution of the instruction, and during WBX, WBY (Fig. 1a), core 20 writes the result in the data portion of that write buffer entry 152 to "issue" the write buffer entry, setting the data valid control bit (DV). The write buffer entry 152 is "retired" in an asynchronous manner, in program order, by interrogating the AV and DV bits of a selected entry 152 and, if both are set, by causing the contents of the address and data portions of the entry 152 to appear on the cache port 160 or the system bus, as the case may be.

### 3.1 Allocation of write buffer entries

Referring now to Figure 6, the process for allocation of write buffer entries 152 according to the preferred embodiment of the invention will now be described in detail. In this embodiment of the invention, the allocation process is performed as part of the second address calculation stages AC2 in both the X and Y pipelines. As shown by process 170 of Figure 6, the allocation process is initiated upon the calculation of a physical memory address to which results of an instruction are to be written (i.e., a memory write).

For ease of explanation, the sequence of Figure 6 will be described relative to one of the sections 152x, 152y of write buffer 29. The allocation of write buffer entries 152 in the opposite section of write buffer 29 will be identical to that shown in Figure 6.

Once the physical address is calculated, process 172 retrieves control bit AV from the write buffer entry 152 to which the allocation pointer 156 is pointing. Each side of write buffer 29 according to this embodiment of the invention operates as a circular buffer, with allocation pointers 156x, 156y indicating the next write buffer entry 152 to be allocated for the X and Y pipelines, respectively; for purposes of this description, the write buffer entry 152 to which the appropriate allocation pointer 156x, 156y points will be referred to as 152ₙ. Decision 173 determines if control bit AV is set (1) or cleared (0). If control bit AV is already set, write buffer entry 152ₙ is already allocated or pending, as it has a valid address already stored therein. As such, entry 152ₙ is not available to be allocated at this time, causing wait state 174 to be entered, followed by repeated retrieval and checking of control bit AV for the next entry 152ₙ₊₁ in process 172 and decision 173.

If decision 173 determines that control bit AV for entry 152ₙ is cleared, entry 152ₙ is available for allocation as it is not already allocated or pending. In this case, process 176 stores the physical address calculated in process 170 into the address portion of entry 152ₙ.

The specific order of processes 176 through 188 shown in Figure 6 is by way of example only. It is contemplated that these processes may be performed in any order deemed advantageous or suitable for the specific realization by one of ordinary skill in the art

### 3.1.1 Read-after-multiple-write hazard handling

According to this embodiment of the invention, certain data dependencies are detected and handled relative to write buffer accesses. As is well known in the art, data dependencies are one type of hazard in a pipelined architecture microprocessor, that can cause errors in the program result These dependencies are even more prevalent in the superscalar superpipelined architecture of microprocessor 10, particularly where certain instructions may be executed out of program order for performance improvement Specifically, as noted hereinabove relative to Figure 4, and as will be described in further detail hereinbelow, write buffer 29 can source data to core 20 via buses SRCx, SRCy prior to retiring of an entry if the data is needed for a later instruction in the pipeline. Readable control bit (RD) in write buffer entries 152 assists the handling of a special type of read-after-write (RAW) dependency, in which the pipeline contains a read of a physical memory address that is to be performed after multiple writes to the same physical address, and prior to the retiring of the write buffer entries 152 assigned to this address. According to the preferred embodiment of the invention, only write buffer entries 152 having their control bit RD set can be used to source data to core 20 via buses SRCx, SRCy. This avoids the possibility that incorrect data may be sourced to core 20 from a completed earlier write, instead of from a later allocated but not yet executed write operation to the same physical address.

In process 178, write buffer control logic 150 examines the address fields of each previously allocated write buffer entry 152 to determine if any match the physical address which is to be allocated to entry 152ₙ. According to the preferred embodiment of the invention, considering that the size of each read or write operation can be as many as eight bytes (if floating point data is to be written; four bytes for integer data in this embodiment of the invention) and that each physical address corresponds to a single byte, not only must the physical address values be compared in process 178 but the memory span of each operation must be considered. Because of this arrangement, write operations having different physical addresses may overlap the same byte, depending upon the size of their operations.

Referring now to Figure 7, the method by which the physical addresses of different memory access instructions are compared in process 178 according to the preferred embodiment of the invention will be described in detail. To compare the write spans of two write operations, pipeline control logic 28 loads a first span map SPAN₀ with a bit map in which bits are set that correspond to the relative location of bytes to which the write operation of the older write instruction will operate, and loads a second span map SPAN₁ with a bit map having set bits corresponding to the location of bytes to which the write operation of the newer write instruction will operate. The absolute position of the set bits in span map is unimportant, so long as the end bits of span maps SPAN₀, SPAN1 correspond to the same physical byte address. Figure 7 illustrates an example of span maps SPAN₀, SPAN₁ for two exemplary write operations. Process 178 next performs a bit-by-bit logical AND of span maps SPAN₀ and SPAN₁, producing map ANDSPAN which indicates with set bits indicating the location of any bytes which will be written by both of the write operations. In the example of Figure 7, two of the bits are set in map ANDSPAN, indicating that the two exemplary write operations both are writing to two bytes.

Process 178 then performs a logical OR of the bits in map ANDSPAN to determine if any bits are set therein. Readable control bit for entry 152ₙ will be set (regardless if any matching entries are found) and control bit RD will be cleared for any previously allocated write buffer entry 152 that causes the result of the logical OR of the bits in map ANDSPAN to be true. Accordingly, and as will be described hereinbelow, if a later read of write buffer 29 is to be performed (i.e., sourcing of data from write buffer 29 prior to retiring), only last-written write buffer entry 152ₙ will have its control bit RD set and thus will be able to present its data to core 20 via source bus SRCx, SRCy. Those write buffer entries 152 having valid data (control bit DV set) but having their control bit RD clear are prevented by write buffer control logic 150 from sourcing their data to buses SRCx, SRCy.

### 3.1.2 Cross-dependency and retiring in program order

As noted above, write buffer entries 152 must be retired (i.e., written to unified cache 60 or main memory 86) in program order. For those implementations of the present invention where only a single bank of write buffer entries 152 are used, program order is readily maintained by way of a single retire pointer 158. However, because of the superscalar architecture of microprocessor 10, and in order to obtain layout efficiency in the realization of write buffer 29, as noted above this example of the invention splits write buffer entries 152 into two groups, one for each of the X and Y pipelines, each having their own retire pointers 158x, 158y, respectively. This preferred embodiment of the invention provides a technique for ensuring retirement in program order between X section write buffer entries 152x and Y section write buffer entries 152y.

Referring now to Figure 8, a map of cross-dependency control bits XDEP for a selected write buffer entry 152xᵢ, at the time of its allocation, is illustrated. As shown in Figure 8, each write buffer entry 152xᵢ in the X portion of write buffer 29 has six cross-dependency control bits XDEP₀ through XDEP₅, each bit corresponding to one of the write buffer entries 152yᵢ in the Y section 152y of write buffer 29; similarly (and not shown in Figure 8), each write buffer entry 152yᵢ will have six cross-dependency control bits YDEP₀ through YDEP₅, one for each of the write buffer entries 152xᵢ in the X section 152x of write buffer 29. As illustrated in Figure 8, the contents of each cross-dependency bit XDEP for write buffer entry 152xᵢ corresponds to the state of control bit AV for a corresponding write buffer entry 152yᵢ in the Y section 152y of write buffer 29, at the time of allocation.

Process 180 in the allocation process of Figure 6 loads cross-dependency control bits XDEP₀ through XDEP₅ for write buffer entry 152ₙ that is currently being allocated, with the state of the address valid control bits AV for the six write buffer entries 152yᵢ in the Y section 152y of write buffer 29 at the time of allocation. As will be described in further detail hereinbelow, as each write buffer entry 152 is retired, its corresponding cross-dependency control bit XDEP in each of the write buffer entries 152 in the opposite portion of write buffer 29 is cleared. Further, after a write buffer entry 152 has its cross-dependency control bits XDEP set in process 180 of the allocation sequence, no additional setting of any of its own cross-dependency control bits XDEP can occur.

Program order is thus maintained by requiring that, in order to retire a write buffer entry 152, all six of its cross-dependency control bits XDEP₀ through XDEP₅ must be cleared (i.e., equal to 0). Accordingly, the setting of cross-dependency control bits XDEP in process 180 takes a "snapshot" of those write buffer entries 152 in the opposite portion of write buffer 29 that are previously allocated (i.e., ahead of the allocated write buffer entry 152ₙ in the program sequence). The combination of the cross-dependency control bits XDEP and retire pointers 158x, 158y ensure that write buffer entries 152 are retired in program order.

In similar manner, as will be described in detail hereinbelow, microprocessor 10 may include provisions for performing non-cacheable reads from main memory 86, which must be performed in program order. The presence of a previously allocated non-cacheable read is indicated for each write entry by non-cacheable read allocation control bit (NCRA) being set; upon execution of the non-cacheable read, control bit NCRA is cleared for all write buffer entries 152. The setting and clearing of control bit NCRA is performed in the same manner as cross-dependency control bits XDEP described hereinabove, to ensure that the non-cacheable read is performed in the proper program order.

### 3.1.3 Completion of allocation process

Process 182 is then performed in the allocation of write buffer entry 152ₙ, in which certain control bits in write buffer entry 152ₙ are set according to the specific attributes of the memory write to be accomplished thereto. Write size control bits (SIZE) are set with the number of bytes of data (up to eight bytes, thus requiring three write size control bits SIZE) that are to be written to write buffer entry 152ₙ, as indicated in the instruction.

Others of the control bits in write buffer entry 152ₙ are also set in process 182 to control the operation of microprocessor 10 in the use of write buffer entry 152ₙ. While the specific control effected in this embodiment of the invention based upon the state of these bits will be described in detail hereinbelow, the following is a summary of the nature of these control bits. Non-cacheable write control bit (NC) is set if the memory write operation is to be non-cacheable. Mergeable control bit (MRG) is set for write buffer entry 152ₙ if the physical memory locations corresponding thereto are contiguous and non-overlapping with the memory locations corresponding to a previously allocated write buffer entry 152ᵢ, such that a gathered write operation may be performed. Write-after-read control bit (WAR) is set if the write operation to write buffer entry 152ₙ is to be performed after a simultaneous read in the other pipeline. Misaligned write control bit (MAW) is set if the length of the data to be written to the physical address stored in write buffer entry 152ₙ crosses an eight-byte boundary (in which case two write cycles will be required to retire write buffer entry 152ₙ). Control bit NCRA is set if a non-cacheable read has previously been allocated and not yet performed.

Once the storing of the physical address and the setting of the control bits in write buffer entry 152ₙ is complete, control bit AV for write buffer entry 152ₙ is set in process 184. In addition, if not previously cleared by a previous retire operation, control bit DV is cleared at this time. The setting of control bit AV indicates the allocation of write buffer entry 152ₙ to subsequent operations, including the setting of cross-dependency control bits XDEP upon the allocation of a write buffer entry 152 in the opposite section of write buffer 29.

In process 186, write buffer control logic 150 returns the tag value of now-allocated write buffer entry 152ₙ to core 20. Core 20 then uses this four bit tag value in its execution of the instruction, rather than the full thirty-two bit physical address value calculated in process 170. The use of the shorter tag value facilitates the execution of the instruction, and thus improves the performance of microprocessor 10.

The allocation sequence is completed in process 188, in which allocation pointer 156x, 156y (depending upon whether write buffer entry 152ₙ is in the X or Y sections 152x, 152y of write buffer 29) is incremented to point to the next write buffer entry 152 to be allocated. Control then passes to process 190, which is the associated EX stage in the pipeline, if the instruction associated with the write is not prohibited from moving forward in the pipeline for some other reason.

### 3.2 Issuing of data to write buffer entries

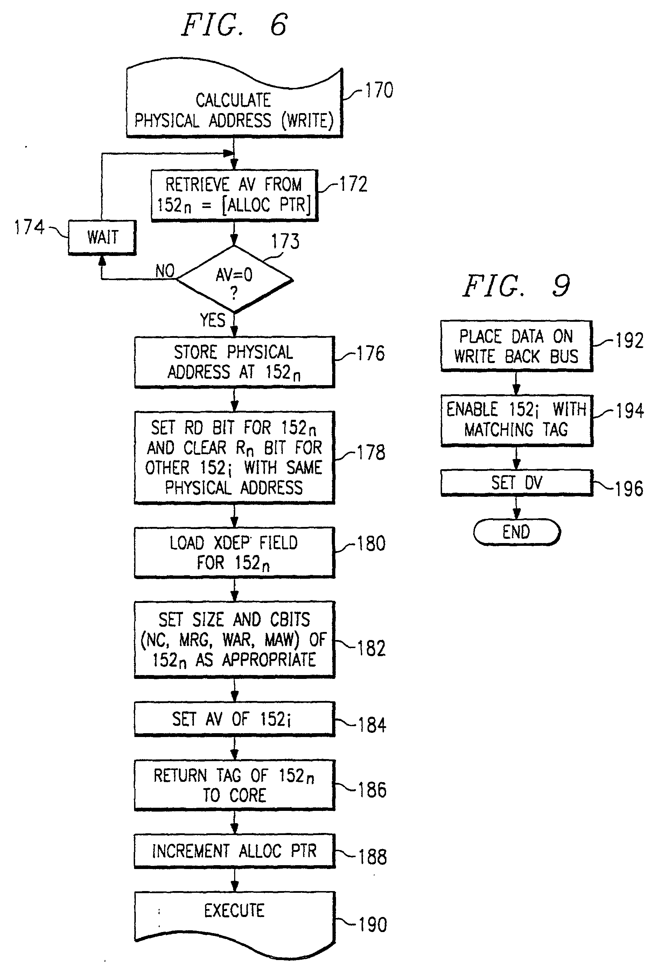

Referring now to Figure 9, the process of issuing data to write buffer entries 152 will be described in detail relative to a selected write buffer entry 152ᵢ. As noted above, the issue of data to write buffer 29 is performed by core 20 after completion of the EX stage of the instruction, and during one of WB stages depending upon whether operation is in the X or the Y pipeline.

The issue sequence begins with process 192, in which core 20 places the data to be written to write buffer 29 on the appropriate one of writeback buses WB_x, WB_y, depending upon which of the X or Y pipelines is executing the instruction. Core 20 is also communicating the tag of the destination write buffer entry 152 to write buffer control logic 150. Write buffer control logic 150 then enables write buffer entry 152ᵢ, which is the one of write buffer entries 152 associated with the presented tag value, to latch in the data presented on its associated writeback bus WB_x, WB_y, in process 194. Once the storage or latching of the data in write buffer entry 152ᵢ is complete, control bit DV is set in process 196, ending the issuing sequence.

Once write buffer entry 152ᵢ has both its control bit AV and also its control bit DV set, write buffer entry 152ᵢ is in its "pending" state, and may be retired. As noted above, the retiring of a write buffer entry 152 is accomplished on an asynchronous basis, under the control of cache logic used to operate unified cache 60, such that the writing of the contents of write buffer entries 152 to unified cache 60 or main memory 86 occurs on an as available basis, and does not interrupt or delay the performance of cache or main memory read operations. Considering that memory reads are generally of higher priority than memory writes, due to the dependence of the program being executed upon the retrieval of program or data from memory, write buffer 29 provides significant performance improvement over conventional techniques.

### 3.3 Retiring of write buffer entries

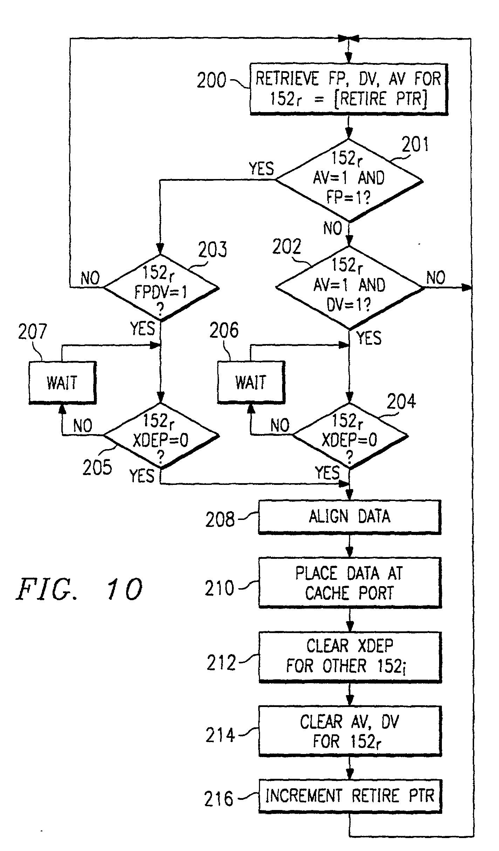

Referring now to Figure 10, the sequence by way of which write buffer entries 152 are retired under the control of cache control logic contained within or provided in conjunction with unified cache 60 will now be described in detail. Certain special or complex write operations will be described in specific detail hereinbelow. As such, the retiring sequence of Figure 10 is a generalized sequence.

### 3.3.1 Retiring of integer write buffer data

As noted above, the retiring sequence of Figure 10 is performed under the control of cache control logic contained within or in conjunction with unified cache 60, and is asynchronous relative to the operation of the X and Y pipelines. As noted above, it is important that write buffer entries 152 be retired in program order. Accordingly, write buffer 29 operates as a circular buffer with the sequence determined by retire pointers 158x, 158y for the two portions of write buffer 29. Retire pointers 158x, 158y maintain the program order of write buffer entries 152 in their corresponding sections 152x, 152y of write buffer 29, and cross-dependency control bits XDEP maintain order of entries 152 between sections 152x, 152y, as will be noted from the following description.

For ease of explanation, as in the case of the allocation sequence described hereinabove, the sequence of Figure 10 will be described relative to one of the sections 152x, 152y of write buffer 29. The retiring sequence for the opposite section 152x, 152y of write buffer 29 will be identical.

The retiring sequence begins with process 200, in which control bit FP, control bit DV and control bit AV are retrieved from write buffer entry 152ᵣ, which is the one of write buffer entries 152 that retire pointer 158 is indicating as the next entry 152 to be retired. In decision 201, control bit FP and control bit AV are tested to determine if write buffer entry 152ᵣ is associated with floating point data latch 166 (and thus is buffering floating point results from the FPU 70). If both control bit FP and control bit AV are set, write buffer entry 152ᵣ is associated with floating point data and the data will be retired according to the process described in section 3.3.2 hereinbelow.

If control bit AV is set and floating point control bit FP is clear, write buffer entry 152ᵣ is directed to integer data. Decision 202 is next performed, in which the cache control logic determines if control bit AV and control bit DV are both set. If not, (either of AV and DV being clear), entry 152ᵣ is not ready to be retired, and control passes to process 200 for repetition of the retrieval and decision processes. If both are set, valid integer data is present in the data portion of write buffer entry 152ᵣ, and the entry may be retirable.

Decision 204 is then performed to determine if cross-dependency control bits XDEP are all clear for write buffer entry 152ᵣ. As described hereinabove, cross-dependency control bits XDEP are a snapshot of the control bits AV for the write buffer entries 152 in the opposite section of write buffer 29 beginning at allocation of write buffer entry 152ᵣ, and updated upon the retirement of each write buffer entry 152. If all of the cross-dependency control bits XDEP are clear for write buffer entry 152ᵣ (and retire pointer 158 is pointing to it), write buffer entry 152ᵣ is next in program order to be retired, and control passes to process 208.

If cross-dependency control bits XDEP are not all clear, than additional write buffer entries 152 in the opposite section of write buffer 29 must be retired before entry 152_{y} may be retired, so that program order may be maintained. Wait state 206 is effected, followed by repetition of decision 204, until the write buffer entries 152 in the opposite section that were allocated prior to the allocation of write buffer entry 152ᵣ are retired first

As will be described in detail hereinbelow, microprocessor 10 may include provisions for performing non-cacheable reads from main memory 86, which must be performed in program order. The presence of a previously allocated non-cacheable read is indicated for each write entry by control bit NCRA being set; upon execution of the non-cacheable read, control bit NCRA is cleared for all write buffer entries 152. If this feature is implemented, decision 204 will also test the state of control bit NCRA, and prevent the retiring of write buffer entry 152ᵣ until such time as both all cross-dependency control bits XDEP and also control bit NCRA are clear.

Process 208 is then performed, in which the data section of write buffer entry 152ᵣ is aligned with the appropriate bit or byte position for presentation to cache port 160 or to the memory bus. This alignment is necessary considering that the physical memory address corresponds to specific byte locations, but the data is presented in up to sixty-four bit words (eight bytes). As such, alignment of data with the proper bit positions is important to ensure proper memory write operations. In addition, special alignment operations such as required for gathered writes and for misaligned writes are accomplished in process 208. Details of these alignment features and sequences are described hereinbelow.

Process 210 then forwards the data portion of write buffer entry 152ᵣ to cache port 160, whether directly or via the special write circuitry shown in Figure 4. Once this occurs, the one of cross-dependency control bits XDEP corresponding to write buffer entry 152ᵣ is cleared in each write buffer entry 152ᵢ in the opposite section of write buffer 29 (in process 212). This allows the next write buffer entry 152 in sequence (i.e., the write buffer entry 152ᵢ pointed to by the opposite retire pointer 158) to be retired in the next operation. Process 214 clears control bit AV and control bit DV for the write buffer entry 152ᵣ currently being retired. Process 216 then increments retire pointer 158 for its section to enable the retirement of the next write buffer entry 152 in sequence, and allow re-allocation of write buffer entry 152ᵣ. Control of the retiring sequence then passes back to process 200 for retrieval of the appropriate control bits.

As noted above, while a single cache port 160 is schematically illustrated in Figure 4 and discussed relative to process 210 hereinabove, cache port 160 serves as a dual cache port and write buffer 29 in microprocessor 10 of Figure 1a is also in communication directly with data bus DATA. Accordingly, in this case, the cache control logic will select the appropriate port to which write buffer 29 presents data from entry 152ᵣ in process 210.

Furthermore, the provision of dual cache port 160 allows for additional streamlining in the case where two sections of write buffer 29 are provided, as shown in Figure 4, as data may be presented from two write buffer entries 152 (one in each of the X and Y sections 152x, 152y of write buffer 29) simultaneously via the dual cache port 160. If such simultaneous presentation of data is provided, the cross-dependency decision 204 must allow for one of the write buffer entries 152 to have a single set cross-dependency control bit XDEP, so long as the simultaneously presented write buffer entry 152 corresponds to the set XDEP bit The retiring process may thus double its output rate by utilizing the two sections 152x, 152y of write buffer 29.

### 3.3.2 Retire of floating point write buffer data

If decision 201 determines that both control bit AV and control bit FP are set, write buffer entry 152ᵣ to which retire pointer 158 points is associated with floating point results from the FPU 70. According to this embodiment of the invention, control bit DV for entry 152ᵣ will also be set despite the absence of valid integer data therein, for purposes of exception handling as will be described hereinbelow.

Decision 203 is then performed, by way of which the cache control logic interrogates control bit FPDV of floating point data latch 166 to see if the FPU 70 has written data thereto, in which case control bit FPDV will be set Control bit FPDV is analogous to control bit DV of write buffer entries 152, as it indicates when set that the FPU 70 has written valid data thereto. Conversely, if control bit FPDV is clear, the FPU 70 has not yet written data to floating point data latch 166, in which case decision 204 will return control to process 200 in the retire sequence of Figure 10.

If control bit FPDV is set, decision 205 is then performed by way of which cross-dependency control bits XDEP of write buffer entry 152ᵣ are interrogated to see if all bits XDEP are cleared. If not, additional write buffer entries 152 that were allocated in program order prior to entry 152ᵣ, and that reside in the opposite section of write buffer 29 from entry 152ᵣ, must be retired prior to entry 152ᵣ being retired. Wait state 207 is then executed, and decision 205 is repeated. Upon all cross-dependency control bits XDEP of entry 152ᵣ becoming clear, decision 205 passes control to process 208, for alignment and presentation of the contents of floating point data latch 166 to cache port 160. As noted above, if simultaneous presentation of two write buffer entries 152 are allowed via dual cache port 160, one of the entries 152 may have a single set XDEP bit so long as it corresponds to the simultaneously presented entry of the pair.

Cross-dependency control bits XDEP in opposite section entries 152 are then cleared (process 212), control bit AV and control bit FPDV are cleared (process 214), and retire pointer 158 is incremented (process 216), as in the case of integer data described hereinabove.

### 3.4 Ordering of non-cacheable reads

The cross-dependency scheme used in the allocation of write buffer entries 152 described hereinabove may also be used for other functions in microprocessor 10. Similarly as for non-cacheable writes described hereinbelow, microprocessor 10 may have instructions in its program sequence that require non-cacheable reads from memory. By way of definition, a non-cacheable read is a read from main memory 86 that cannot by definition be from unified cache 60; the non-cacheable read may, for purposes of this description, be considered as a single entry read buffer that serves as a holding latch for requesting a read access to main memory 86. In order to ensure proper pipeline operation, non-cacheable reads must be executed in program order. Accordingly, especially in the case of superpipelined superscalar architecture microprocessor 10 described herein, a method for maintaining the program order of non-cacheable reads is necessary.

Referring now to Figure 17, non-cacheable read cross-dependency field 310 according to the preferred embodiment of the invention is illustrated. Non-cacheable read cross-dependency field 310 is preferably maintained in cache control logic of unified cache 60, and includes allocated control bit NCRV which indicates, when set, that a non-cacheable read has been allocated. Similarly as cross-dependency control bits XDEP described hereinabove, and as described above, control bit NCRA in each write buffer entry 152 is set, at the time of its allocation, if allocated control bit NCRV is set, indicating that a non-cacheable read is previously allocated. Control bit NCRA is tested during the retiring of each write entry 152 to ensure proper ordering of requests to main memory 86.

In addition, non-cacheable read cross-dependency field 310 contains one bit position mapped to each of the control bits AV of each write buffer entry 152, to indicate which of write buffer entries 152 are previously allocated at the time of allocation of the non-cacheable read, and to indicate the retirement of these previously allocated write buffer entries 152. Non-cacheable read cross-dependency field 310 operates in the same manner as cross-dependency control bits XDEP, with bits set only upon allocation of the non-cacheable read, and cleared upon retirement of each write buffer entry.

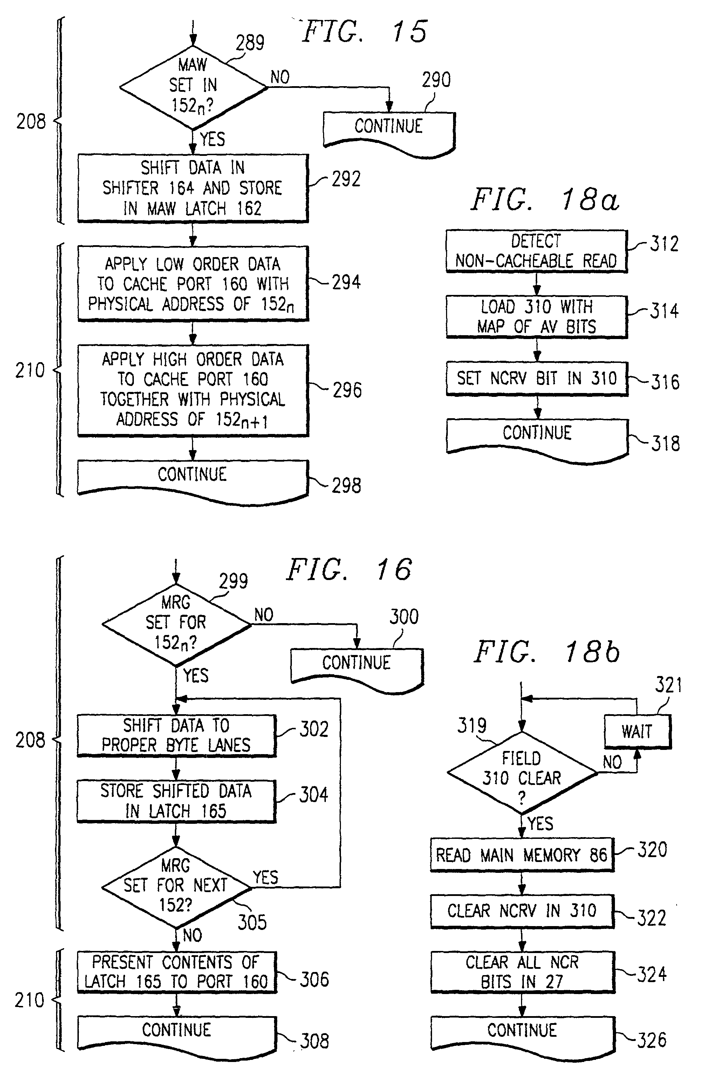

Referring now to Figures 18a and 18b, the processes of allocating and retiring a non-cacheable read operation according to the preferred embodiment of the invention will now be described in detail. In Figure 18a, the allocation of non-cacheable read is illustrated by process 312 first determining that an instruction includes a non-cacheable read. Process 314 is then performed by way of which a snapshot of the control bits AV are loaded into non-cacheable read cross-dependency field 310. Process 316 is then performed, in which allocated control bit NCRV in non-cacheable read cross-dependency field 310 is set, indicating to later-allocated write buffer entries 152 that a non-cacheable read operation has already been allocated. Address calculation stage AC2 then continues (process 318).

Figure 18b illustrates the performing of the non-cacheable read, under the control of the control logic of unified cache 60. Decision 319 determines if non-cacheable read cross-dependency field 310 is fully clear. If any bit in non-cacheable read cross-dependency field 310 is set, one or more of the write buffer entries 152 allocated previously to the non-cacheable read has not yet been retired; wait state 321 is then entered and decision 319 repeated until all previously allocated write buffer entries have been retired.

Upon non-cacheable read cross-dependency field 310 being fully clear, the non-cacheable read is next in program order to be performed. Process 320 is then executed to effect the read from main memory 86 in the conventional manner. Upon completion of the read, allocated control bit NCRV in non-cacheable read cross-dependency field 310 is cleared in process 322, so that subsequent allocations of write buffer entries 152 will not have their control bits NCRA set Process 324 then clears control bits NCRA in each of write buffer entries 152, indicating the completion of the non-cacheable read and allowing retiring of subsequent write buffer entries 152 in program order.

Considering that control bits NCRA in write buffer entries 152, taken as a set, correspond to non-cacheable read cross-dependency field 310, it is contemplated that the use of a single set of these indicators can suffice to control the program order execution of the non-cacheable read. For example, if only non-cacheable read cross-dependency field 310 is used, allocation and retiring of write buffer entries 152 would be controlled by testing field 310 to determine if a non-cacheable read has been allocated, and by testing the corresponding bit position in field 310 to determine if the particular write buffer entry 152 was allocated prior to or after the non-cacheable read.

Therefore, according to this preferred embodiment of the invention, non-cacheable read operations can be controlled to be performed in program order relative to the retiring of write buffer entries 152.

### 4. Read-after-write hazard detection and write buffer operation

As discussed above, certain hazards are inherent in pipelined architecture microprocessors, and particularly in superpipelined superscalar microprocessors such as microprocessor 10. An important category of such hazards are data dependencies, which may occur if multiple operations to the same register or memory location are present in the pipeline at a given time.

A first type of data dependency is the RAW, read-after-write, data dependency, in which a write and a read to the same memory location are present in the pipeline, with the read operation being a newer instruction than the write. In such a case, the programmer has assumed that the write will be completed before the read is executed. Due to pipeline operation, however, the memory access for the read operation may be performed prior to the execution of the write, particularly if the read operation is implicit in another instruction such as an add or multiply. In this event, the read will return incorrect data to the core, since the write to the memory location has not yet been performed. This hazard is even more likely to occur in a superscalar superpipelined architecture of microprocessor 10, and still more likely if instructions can be executed out of program order, as described above.

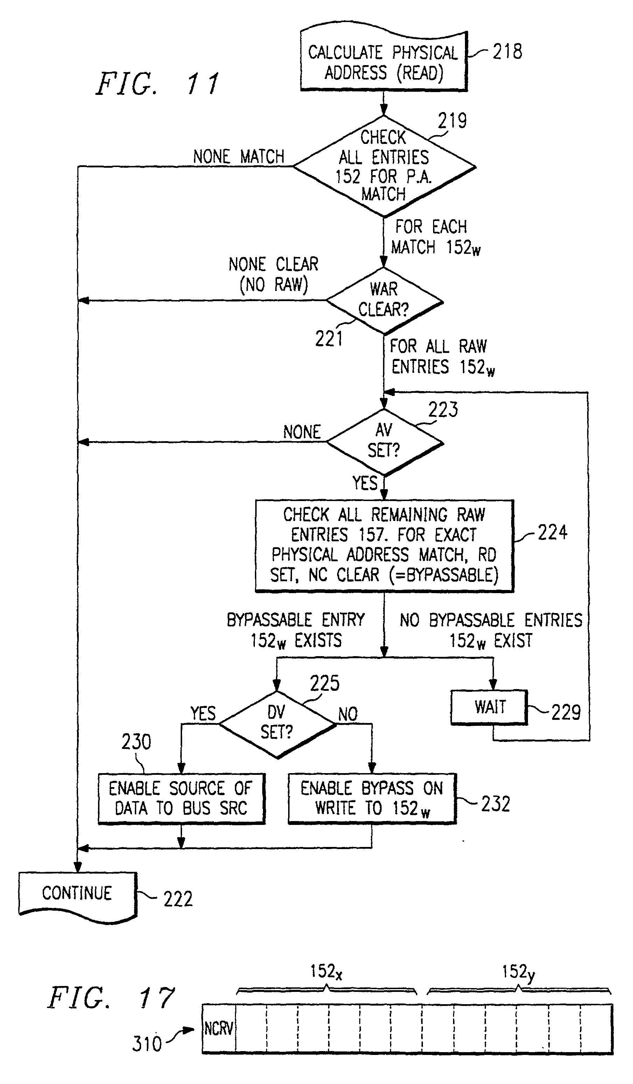

Referring to Figure 11, the sequence of detecting and handling RAW hazards in microprocessor 10 according to the preferred embodiment of the invention will now be described in detail. In this example, RAW hazard detection occurs as a result of physical address calculation process 218 performed in the second address calculation stage AC2 of the X and Y pipelines for each read instruction. In decision 219, write buffer control logic 150 compares the read physical address calculated in process 218 against each of the physical address values in all write buffer entries 152, regardless of pipeline association. This comparison not only compares the physical address of the read access to those of the previously allocated addresses, but also considers the span of the operations, in the manner described hereinabove relative to process 178 in Figures 6 and 7. This comparison is also performed relative to the instruction currently in the second address calculation stage of the opposite X or Y pipeline. If there is no overlap of the read operation with any of the writes that are either previously allocated, or simultaneously allocated but earlier in program order, no RAW hazard can exist for that particular read operation, and execution continues in process 222. If decision 219 determines that there is a match between the physical address calculated for the read operation and the physical address for one or more write buffer entries 152_{w} that is allocated for an older instruction and has its address valid control bit AV set or that is allocated for a simultaneously allocated write for an older instruction, a RAW hazard may exist and the hazard handling sequence illustrated in Figure 11 continues.

As noted above, one of the control bits for each write buffer entry 152 is write-after-read control bit WAR. This control bit indicates that the write operation for which a write buffer entry 152 is allocated is a write-after-read, in that it is a write operation that is to occur after an older (in program order) read instruction that is in the second address calculation stage AC2 of the opposite pipeline at the time of allocation. Control bit WAR is set in the allocation sequence (process 182 of Figure 6) if this is the case. This prevents lockup of microprocessor 10 if the newer write operation executes prior to the older read operation, as the older read operation would, upon execution, consider itself a read-after-write operation that would wait until the write is cleared; since the write operation is newer than the read and will wait for the read to clear, though, neither the read nor the write would ever be performed. Through use of control bit WAR, microprocessor 10 can determine if an apparent RAW hazard is in fact a WAR condition, in which case the write can be processed.

Accordingly, referring back to Figure 11, decision 221 determines if control bit WAR is set for each write buffer entry 152_{w} having a matching physical address with that of the read, as determined in decision 219. For each entry 152_{w} in which the WAR bit is set, no RAW conflict exists; accordingly, if none of the matching entries 152_{w} have a clear WAR bit, execution of the read continues in process 222. However, for each matching write buffer entry 152_{w} in which write control bit WAR is not set, a RAW hazard does exist and the hazard handling sequence of Figure 11 will be performed for that entry 152_{w}. Of course, other appropriate conditions may also be checked in decision 221, such as the clear status of the write buffer no-op control bit (WBNOP), and the status of other control bits and functions as may be implemented in the particular realization of the present invention.

Decision 223 is next performed in which the control bit AV, address valid, is tested for each RAW entry 152_{w}. Decision 223 is primarily performed to determine if those RAW entries 152_{w} causing wait states for the read operation (described below) have been retired. If no remaining RAW entries 152_{w} have their control bits AV set, the RAW hazard has been cleared and the read operation can continue (process 222).

For each of the remaining matching RAW entries 152_{w}, process 224 is next performed to determine if the entry is bypassable, or if the write causing the hazard must be completed prior to continuing the read operation. According to the preferred embodiment of the invention, techniques are available by way of which unified cache 60 and, in some cases write buffer 29, need not be written with the data from the write prior to sourcing of the data to the read operation in core 20.

Such bypassing is not available for all writes, however. In this example, the results of non-cacheable writes (indicated by non-cacheable control bit, NC, being set in entry 152) must be sourced from main memory 86. Secondly, as discussed hereinabove, a special case of RAW hazard is a read after multiple writes to the same physical location. As shown in Figure 6, process 178 of the allocation sequence sets control bit, RD, of a write buffer entry 152 and clears control bit RD of all previously allocated write buffer entries to the same physical address. Conversely, those write buffer entries 152 that are not readable (i.e., their control bit RD is clear) cannot be used to source data to core 20, as their data would be in error. Thirdly, data cannot be sourced from a write operation if the subsequent read encompasses bytes not written in the write operation, as an access to cache 60 or main memory 86 would still be required to complete the read.

In the RAW handling sequence of Figure 11, process 224 is performed on each matching write buffer entry 152_{w} to determine if the control bit RD for entry 152_{w} is set (indicating that entry 152_{w} is the last entry 152 allocated to the physical address of the read), to determine if the control bit NC is clear (indicating that the write is not non-cacheable), and also to determine if the physical address of the read is an "exact" match to that of the write to write buffer entry 152_{w}, in that the bytes to be read are a subset of the bytes to be written to memory. An entry 152_{w} for which all three conditions are met are said to be "bypassable", and control passes to decision 225 described below. If no bypassable entry 152_{w} exists, as one or more of the above conditions (non-cacheable, non-readable, or non-exact physical address) are not met, wait state 229 is effected and control passes back to decision 223; this condition will remain until all non-bypassable entries 152_{w} are retired as indicated by their control bits AV being clear, after which the read operation may continue (process 222).

In this embodiment of the invention, the method of bypassing applicable to each bypassable entry 152_{w} is determined in decision 225, in which control bit DV, data valid, is tested to determine if write buffer entry 152_{w} is pending (i.e., contains valid data) but not yet retired. For each bypassable entry 152_{w} that is pending, process 230 is performed by write buffer control logic 150 to enable the sourcing of the contents of the data portion of write buffer entry 152_{w} directly to core 20 without first having been written to memory. Referring to Figure 4, process 230 is effected by write buffer control logic 150 enabling write buffer entry 152_{w}, at the time of the read operation, to place its data on its source bus SRC (i.e., the one of buses SRCx, SRCy for the section of write buffer 29 containing entry 152_{w}) and by controlling the appropriate multiplexer 154 to apply source bus SRC to the one of the X or Y pipelines of core 20 that is requesting the data. In this case, therefore, the detection of a RAW hazard is handled by sourcing data from write buffer 29 to core 20, speeding up the time of execution of the read operation.

For those bypassable write buffer entries 152_{w} that are not yet pending, however, as indicated by decision 225 finding that control bit DV is not set, valid data is not present in entry 152_{w}, and cannot be sourced to core 20 therefrom. Process 232 is performed for these entries 152_{w} so that, at the time that the write by core 20 to write buffer entry 152_{w} occurs, the valid data on writeback bus WB_x or WB_y (also present on the corresponding bypass bus BP_x, BP_y and applied to the appropriate one of multiplexers 154x, 154y) will be applied to the requesting X or Y pipeline in core 20. In this way, the RAW hazard is handled by bypassing write buffer 29 with the valid data, further speeding the execution of the read operation, as the storing and retrieval of valid data from cache 60, main memory 86, or even the write buffer entry 152_{w} are not required prior to sourcing of the data to core 20.

### 5. Speculative execution and exception handling

### 5.1 Speculative execution

As noted above, superpipelined superscalar microprocessor 10 according to the preferred embodiment of the invention is capable of executing instructions in a speculative manner. The speculation arises from the execution of one or more instructions after a conditional branch or jump statement, prior to determining the state of the condition upon which the jump or branch is based. Without speculative execution, the microprocessor would have to wait for the execution of the instruction that determines the state of the condition, prior to execution of any subsequent instructions, resulting in a pipeline "stall" condition. In speculative execution, microprocessor 10 speculates to the state of the condition, and executes instructions based on this speculation. The effect of pipeline stalls is reduced significantly, depending upon the number of speculative executions undertaken and the rate at which the speculation is accurate.

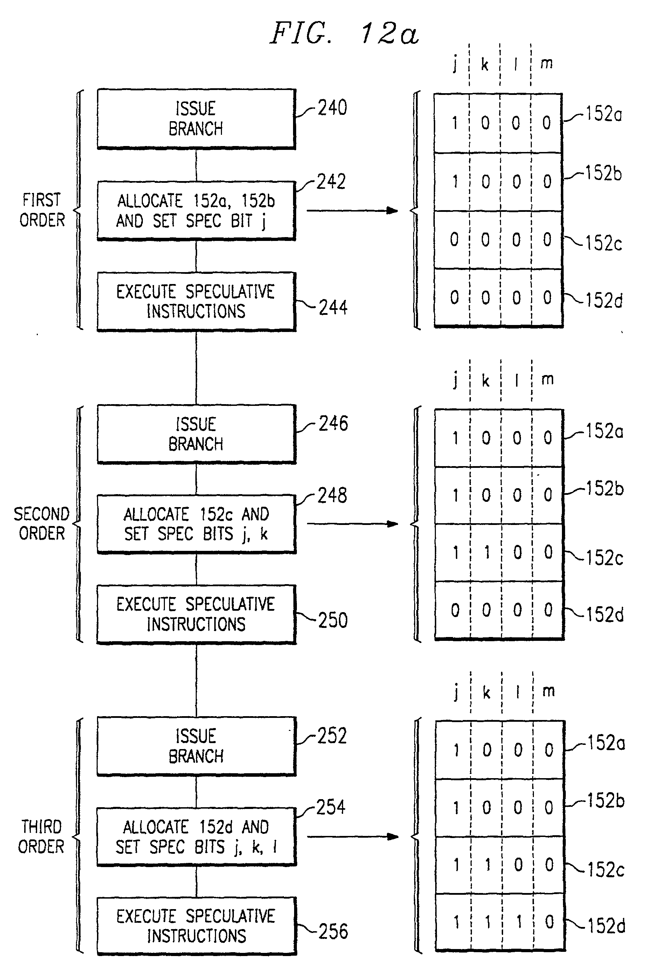

Microprocessor 10 according to this embodiment of the invention includes circuitry for rapidly clearing the effect of unsuccessful speculation, particularly in ensuring that the results of speculative writes are not retired to memory and in removing the speculatively written data from write buffer 29. Referring now to Figures 12a and 12b, a method for executing speculative writes and handling unsuccessful speculation will now be described in detail. The flow diagrams of Figures 12a and 12b illustrate this method by way of example, rather than in a generalized manner; it is contemplated that one of ordinary skill in the art having reference to the following description of this example will be able to readily implement the method of Figures 12a and 12b in a microprocessor realization.

The exemplary sequence of Figure 12a begins with process 240, in which core 20 selects a series of instructions to be performed in a speculative manner, in that the series of instructions correspond to one result of a conditional branch where the condition is not yet known. The determination of which of the conditional branches (i.e., whether or not to take the conditional branch or jump) to select may be made according to conventional predictive branching schemes. In process 242, allocation of two write buffer entries 152a, 152b (the speculative branch including two write operations to memory, in this example) is performed in the second address calculation stage AC2 of the pipeline, as described hereinabove. However, because the write operations to write buffer entries 152a, 152b is speculative, at least one of the speculation control bits (SPEC)is set during the allocation of process 242, depending upon the order of speculation of the write.

In this embodiment of the invention, four orders of speculative execution are permitted. The order, or degree, of speculation is indicated for each write buffer entry 152 by the four j, k, l, m SPEC control bits (SPEC bits), with each bit position corresponding to whether the write buffer entry 152 is a speculative write for one of the selected conditional branches. Figure 12a illustrates the condition of four write buffer entries 152a, 152b, 152c, 152d after the allocation of process 242. As shown in Figure 12a, write buffer entries 152a, 152b allocated in process 242 have their j SPEC bit set. Because the allocation of process 242 is for first order speculation (i.e., it is the first speculation made in this example), only the single j SPEC control bit is set for entries 152a, 152b. Write buffer entries 152c, 152d are not yet allocated, and as such their speculation control bits are clear.

After the allocation of process 242, initiation of the execution of the speculative instructions in the selected conditional branch begins in process 244. The execution of these instructions will, if completed, effect the writes to allocated write buffer entries 152a, 152b, such that their control bits DV become set Because the execution of these writes is speculative, however, the retire sequence described relative to Figure 10 should also include (where speculative execution is incorporated) a gating decision preventing the retiring of a write buffer entry 152 unless its control bits SPEC are all clear. This prevents the results of speculative execution from reaching memory, where it is more difficult and time-consuming, if possible at all, to recover in the event that the speculative prediction was incorrect (i.e., the other branch from that selected in process 240 should have been taken).

In the example of Figure 12a, second order speculation also occurs, such that one of the instructions in the branch selected in process 240 included another conditional branch or jump, for which predictive branch selection is again performed in process 246 to keep the pipeline from stalling. Second order speculation means that in order for the execution of the instructions for the branch selected in process 246 to be successful, not only must the selection in process 246 be correct but the selection in process 240 must also be correct While process 246 is shown in Figure 12a as occurring after the execution of the instructions in process 244, due to the superpipelined architecture of microprocessor 10 described hereinabove, the predictive branching of process 246 will often occur prior to completion of the execution initiated in process 244. Following selection of the branch in process 246, write buffer entry 152c is allocated in process 248 (again during the second address calculation pipeline stage). In this allocation of process 246, since any write to write buffer entry 152c is of second order speculation, both the j and k SPEC control bits are set. The state of control bits SPEC for write buffer entries 152a, 152b, 152c, 152d after process 246 is shown in Figure 12a. Execution of the speculative instructions in the branch selected in process 246 is then initiated in process 250.

In the example of Figure 12a, third order speculation is also undertaken, meaning that the sequence of instructions in the branch selected in process 246 also includes another conditional branch or jump. Process 252 selects one of the branches according to predictive branch selection; however, in order for this third order selection to be successful, all three of the selections of processes 240, 246 and 252 must be successful. Again, as before, process 252 may make the selection of the branch prior to completion of the execution of the instructions in process 250, considering the superpipelined architecture of microprocessor 10. In this example, write buffer entry 152d is allocated in process 254, with the three j, k and 1 SPEC bits set in write buffer entry 152d. The state of the control bits SPEC for write buffer entries 152a through 152d after process 254 is illustrated in process 254. Process 256 then executes the instructions of the branch selected in process 252, including a write operation to write buffer entry 152d.

Referring now to Figure 12b, an example of the handling of both successful and unsuccessful speculative execution by write buffer 29 will now be described. As in the example of Figure 12a, the sequence of Figure 12b is by way of example only rather than for the general case, but it is contemplated that one of ordinary skill in the art will be able to readily realize the method in a microprocessor architecture.

In process 260, core 20 detects that the first selection of process 240 was successful, such that the condition necessary to cause the branch (or non-branch) to the instructions executed in process 244 was satisfied in a prior instruction. Accordingly, the contents of the data portions of write buffer entries 152a, 152b allocated in process 242 and written in process 244 may be retired to memory, as their contents are accurate results of the program being executed. In process 262, therefore, the j SPEC bits of all speculative write buffer entries 152a, 152b, 152c, 152d are cleared; the state of control bits SPEC for write buffer entries 152a through 152d after process 262 is illustrated in Figure 12b. Since write buffer entries 152a, 152b now have all of their speculation control bits SPEC clear (and since its data valid control bit DV was previously set), write buffer entries 152a, 152b may be retired to unified cache 60 or main memory 86, as the case may be.

In the example of Figure 12b, the second branch selection (made in process 246) is detected to be unsuccessful, as the condition necessary for the instructions executed in process 248 was not satisfied by the prior instruction. Furthermore, since the selection of the branch made in process 252 also depended upon the successful selection of process 246, the condition necessary for the instructions to be executed in process 256 also will not be satisfied. To the extent that the writes to write buffer entries 152c, 152d have not yet been performed, these writes will never be performed, because of the unsuccessful predictive selection noted above; to the extent that these writes occurred (i.e., write buffer entries 152c, 152d are pending), the data should not be written to memory as it is in error. Accordingly, write buffer entries 152c, 152d must be cleared for additional use, without retiring of their contents.

The sequence of Figure 12b handles the unsuccessful speculative execution beginning with process 266, in which those write buffer entries 152 having their k SPEC bit set are identified by write buffer control logic 150. In this example, these identified write buffer entries 152 are entries 152c (second order speculation) and 152d (third order speculation). In process 268, write buffer control logic 150 clears the address valid control bits AV for each of entries 152b, 152c, such that entries 152c, 152d may be reallocated and will not be retired (see the retire sequence of Figure 10, in which the AV bit must be set for retiring to take place).

As described hereinabove, retire pointers 158x, 158y point to the ones of write buffer entries 152 next to be retired. According to the preferred embodiment of the invention control bits WBNOP are set for write buffer entries 152c, 152d, such that when the associated retire pointer 158 points to entries 152c, 152d, these entries will be skipped (as though they were never allocated). This allows for retire pointers 158 to "catch up" to allocation pointers 156 if their section of write buffer 29 is empty. Repeated checking of the address valid control bits AV in the retire process can then safely stop, once the empty condition has been met

Execution of the proper conditional branch can resume in process 270 shown in Figure 12b.

### 5.2 Exception handling

In addition to speculative execution, pipeline stalls and bubbles may occur in the event that execution of an instruction returns an error condition, commonly referred to as an exception. An example of an exception is where core 20 detects a divide-by-zero condition. When such an exception is detected in the execution stage of the pipeline, the instructions still in the pipeline must be cleared in order for the exception condition to be properly handled in the conventional manner. Specifically relative to write buffer 29, those write buffer entries 152 which were allocated after the instruction resulting in an exception must be flushed. Since the writes to these entries 152 will never occur (and data valid control bit DV would never be set) because of the removal of the write instructions from the pipeline, entries 152 would never retire from write buffer 29 if not otherwise flushed; microprocessor 10 would then hang indefinitely, waiting for data that would never arrive.

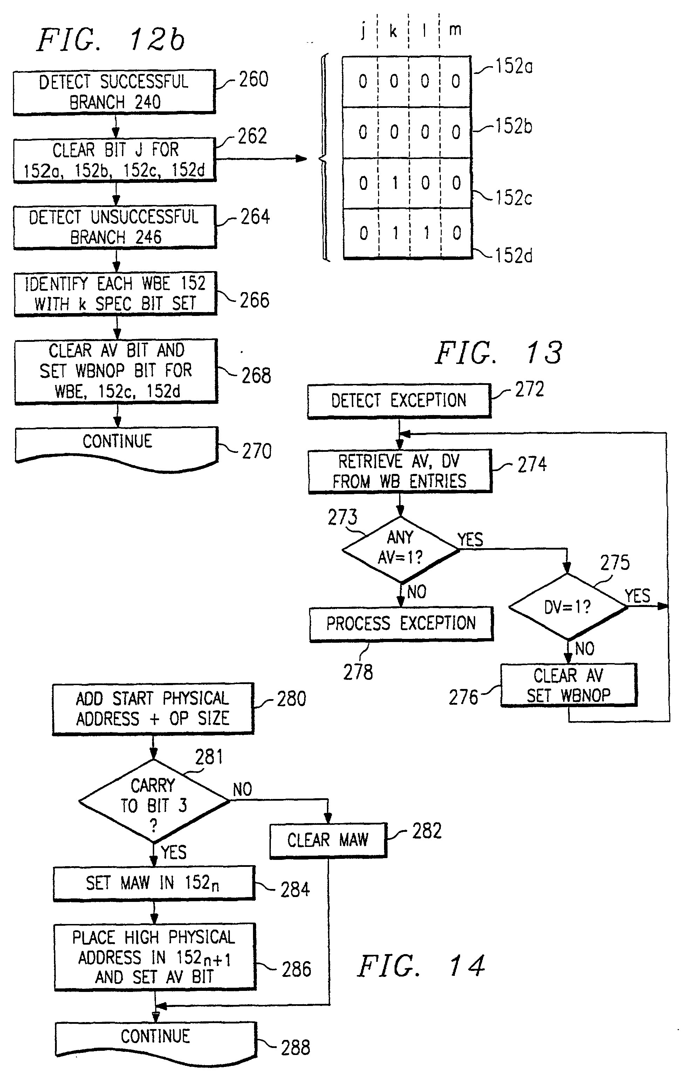

Referring now to Figure 13, an example of a sequence for handling exceptions relative to write buffer 29 will now be described in detail. In process 272, core 20 detects an exception condition. Process 274 is then performed by write buffer control logic 150, in which the control bit AV and control bit DV are retrieved from each write buffer entry 152 in write buffer 29. Decision 273 then determines if any of the control bits AV are set in write buffer 29. For each write buffer 152 that has its control bit AV set, decision 275 tests its control bit DV, data valid, to determine if it is set If not (meaning that the write to that entry 152 had not yet occurred at the time of the exception), control bit AV is cleared and write buffer no-op bit WBNOP is set for that entry 152. As described hereinabove, the WBNOP bit indicates that retire pointers 158 can skip this entry 152, such that the empty condition where allocation pointers 156x, 156y equal their respective retire pointers 158x, 158y can be achieved. Control is then returned to process 274 as will be described hereinbelow.

For those pending write buffer entries having both their control bits AV and control bits DV set (as determined by decisions 273, 275), data was written by core 20 prior to the exception condition. As such, data written to these locations is valid, and can be written to memory in the normal asynchronous retiring sequence as described hereinabove relative to Figure 10. However, prior to the processing of the exception by microprocessor 10, all entries of write buffer 29 must be retired and available for allocation (i.e., write buffer 29 must be empty). Control of the sequence thus returns to process 274, where the control bits AV and control bits DV are again retrieved and interrogated, until such time as the control bits AV for all write buffer entries 152 are clear. Both allocation pointers 156x, 156y will point to the same entry 152 as their respective retire pointers 158x, 158y when all control bits AV are clear, considering the effect of the WBNOP bits. Once this empty condition is achieved, process 278 can be initiated in which the exception condition is processed in the usual manner.

### 6. Special write cycles from the write buffer

As noted above relative to Figure 10, the retiring process may include special write operations from write buffer 29 to cache port 160 or directly to data bus DATA. According to the preferred embodiment of the invention, these special write cycles can include the handling of misaligned writes, and also write gathering. Sequences for handling these special write cycles according to the preferred embodiment of the invention will now be described in detail.

### 6.1 Misaligned writes

As noted above, physical memory addresses presented within microprocessor 10 correspond to byte addresses in memory, while data bus DATA is capable of communicating sixty-four bits in parallel (primarily from data input/output in bus interface unit BIU to unified cache 60 in this embodiment of the invention). Because the physical address in microprocessors of X86 compatibility type is not a modulo of the operand size, a significant fraction of memory writes may overlap eight-byte boundaries; these writes are referred to as "misaligned" writes. Write buffer 29 in microprocessor 10 according to the preferred embodiment of the invention accounts for such misaligned writes by indicating that a write buffer entry 152 is misaligned at the time of allocation, allocating a second write buffer entry 152 which presents the second portion of the write, and by initiating a special routine in the retiring process to account for the misaligned write. These sequences will now be described in detail relative to Figures 14 and 15.

Figure 14 is a flow diagram of a portion of process 182 of the allocation sequence of Figure 6, for detecting misaligned writes and indicating the same for the write buffer entry 152 being allocated. In process 280 of Figure 14, write buffer control logic 150 adds the physical address (lowest byte address) of the write operation to write buffer entry 152ₙ being allocated with the size (in bytes) of the write operation. Information regarding the size of the write operation is contained within the instruction, as is typical for X86 type microprocessor instructions. In decision 281, write buffer control logic determines if the addition of process 280 caused a carry into bit 3, indicating that the eight-byte boundary will be crossed by the write operation to the write buffer entry 152ₙ being allocated. If decision 281 determines that no carry occurred, then the write to entry 152ₙ will not be misaligned; process 282 is then performed in which misaligned write control bit, MAW, is cleared in entry 152ₙ, and the allocation sequence continues (process 288).

If a carry occurred, however, the write to entry 152ₙ will cross the eight-byte boundary, in which case process 284 is performed to set control bit MAW in entry 152ₙ. The next write buffer entry 152ₙ₊₁ to be allocated is then allocated for purposes of the misaligned write, in process 286, by loading the address portion of entry 152ₙ₊₁ with the physical start address for the write to the next eight-byte group (i.e., the eight-byte address after the detected carry in process 281), and setting the control bit AV for entry 152ₙ₊₁. A new physical address calculation (pipeline stage AC2) is required in process 286, considering that the high physical address may reside on a different physical page. The data portion of entry 152ₙ₊₁ will remain empty, however, as entry 152ₙ₊₁ will merely be used in the retiring process to effect the second operand write to memory. The remainder of the allocation process then continues (process 288).

Regardless of whether the write buffer entry 152ₙ is a misaligned write, issuing of data to entry 152ₙ occurs in the manner described hereinabove relative to Figure 9. No special loading of the data portion of write buffer entry 152ₙ is effected according to this embodiment of the invention; in the case of a misaligned write, however, no issuing of data to entry 152ₙ₊₁ will occur.

Referring now to Figure 15, a sequence for handling the misaligned write in the retiring of a write buffer entry 152 will now be described. As in the previously described retiring sequences, the sequence of Figure 15 is preferably performed under the control of the cache control logic with assistance from write buffer control logic 150. The sequence of Figure 15 is performed as part of processes 208 and 210 of Figure 10 described hereinabove. This sequence begins with decision 289, in which the control bit MAW of entry 152ₙ is tested; if clear, the retiring sequence continues (process 290 of Figure 15) in the manner described above. However, if control bit MAW is set for entry 152ₙ, process 292 is next performed in which the data portion of entry 152ₙ is latched in the appropriate misaligned data latch 162x, 162y.

The presentation of data from entry 152ₙ must be done in two memory accesses, considering the misaligned nature of the write. However, in splitting the write operation into two cycles, the data as stored in entry 152ₙ is not in the proper "byte lanes" for presentation to cache port 160. Referring back to Figure 4, shifter 164 is a conventional barrel shifter for shifting the data presented from the corresponding write buffer section 152x, 152y prior to its storage in its misaligned write latch 162x, 162y. Shifter 164 thus is able to effect a single shift of the data in the corresponding write buffer section 152ₙ, such that the lower order data will appear in the higher order bit lanes (for presentation to cache port 160 in the first, lower order address, write operation), and so that the higher order data will appear in the lower order bit lanes (for presentation to cache port 160 in the second, higher order address, write operation). This shifting is effected in process 292 of the sequence illustrated in Figure 15.

Process 294 is next performed by way of which the physical address of entry 152ₙ is presented to cache port 160 along with the portion of the data corresponding to the lower address eight-byte group, aligned (by shifter 164 in process 292) to the byte lanes corresponding to the lower address eight-byte group. This effects the first write operation required for the misaligned write. Process 296 then presents the address and data for the second operand of the misaligned write. The physical address is that stored in the address portion of the next write buffer entry 152ₙ₊₁, and the data is that retained in misaligned write latch 162 from entry 152ₙ, shifted by shifter 164 to the proper byte lanes for the second access to port 160. The remainder of the retiring process then continues (process 298).

As noted above, the exception handling ability of microprocessor 10 according to this embodiment of the invention uses the state of the control bit DV to determine whether an entry 152 either is or is not flushed after detection of an exception. However, in the case of a misaligned write, the second write entry 152ₙ₊₁ does not have its control bit DV set even if the write has been effected, since the valid data is contained within the preceding (in program order) write buffer entry 152ₙ. Accordingly, if both misaligned write handling capability and exception handling as described herein are provided, the exception handling sequence must also test both control bit MAW and control bit DV for an entry 152ₙ and, if both are set, must then consider the next write buffer entry 152ₙ₊₁ (in program order) to also have its control bit DV set, such that entry 152ₙ₊₁ is not flushed.

As a result of this construction, misaligned writes are handled by microprocessor 10 according to the present invention in a way which does not impact core 20 operation, but only includes an additional latching and aligning step during the asynchronously performed, and non-critical, retiring sequence.

### 6.2 Gathered writes

Another type of special write operation performable by microprocessor 10 according to this embodiment of the invention is the gathered write, where the data contained within successive write operations may be gathered into a single write access to memory. As noted above, each physical address corresponds to a byte location. If a series of writes are to be performed to one or a few bytes within the same block of bytes that may be placed on the data bus simultaneously, microprocessor 10 is able to retain the data in the appropriate byte lane so that a single write access to cache port 160 or to memory may be performed instead of successive smaller write accesses. For example, since memory data bus DATA in microprocessor 10 is sixty-four bits wide, eight bytes of data may be simultaneously written; according to the gathered write feature of the present invention, these eight bytes may be gathered from multiple write buffer entries 152 in the manner described hereinbelow.

As described hereinabove relative to the allocation sequence for write buffer 29, mergeable control bit, MRG, is set at the time of allocation for each write buffer entry 152 that is performing a write to a contiguous non-overlapping physical memory address with that of another write buffer entry 152 previously allocated for the immediately preceding memory write instruction in program order. The contiguousness and adjacency constraints are implemented according to this preferred embodiment of the invention in consideration of the X86-compatibility of microprocessor 10; it is contemplated, however, that write gathering may be implemented in other architectures in such a way that membership of the data in the same block of bytes is the only necessary constraint for mergeable writes. After allocation, issuing of data to the mergeable write buffer entries 152 continues in the normal manner described hereinabove.

Referring now to Figure 16, the gathered write operation according to the preferred embodiment of the invention will now be described in detail. Decision 299 determines whether the control bit MRG for the current write buffer entry 152ₙ being retired is set; if not, the normal retiring sequence continues (process 300). If control bit MRG is set for the current entry 152ₙ, process 302 is performed by way of which the data portion of entry 152ₙ is shifted by the appropriate shifter 164x, 164y, to the appropriate byte lanes to accommodate the gathered write. Process 304 is then performed, in which the shifted data is stored in write gather latch 165 in the proper byte lane position without disturbing data already loaded in write gather latch 165 from preceding contiguous non-overlapping writes.

Decision 305 then interrogates the next write buffer entry 152ₙ₊₁ to determine if its control bit MRG is set. If so, control returns to process 302 where the data for this next entry 152ₙ₊₁ is shifted and latched into write gather latch 165 in process 304. Once no more mergeable entries 152 exist, as indicated by either the control bit MRG or the control bit AV being clear for the next entry 152 (in decision 305), the contents of latch 165 are presented to port 160, along with the appropriate physical address to accomplish the gathered write operation to cache 60 or main memory 86, as the case may be. The retiring process then continues as before (process 308).

According to the preferred embodiment of the invention, therefore, the efficiency of retiring data to cache or to memory is much improved by allowing for single memory accesses to accomplish the write operation in lieu of multiple accesses to contiguous memory locations.

### 7. Conclusion

According to the preferred embodiment of the invention, a write buffer is provided between the CPU core and the memory system (including cache memory) to provide buffering of the results of the executed instruction sequence. This enables the cache and memory reads to be performed on a high priority basis with minimum wait states due to non-time-critical write operations that may be occupying the buses or memory systems.

In addition, the preferred embodiment of the invention includes many features that are particularly beneficial for specific microprocessor architectures. Such features include the provision of two sections of the write buffer for superscalar processors, together with a technique for ensuring that the data is written to memory in program order despite the splitting of the buffer. Additional features of the preferred embodiment of the invention include the detection and handling of hazards such as data dependencies and exceptions, and provision for speculative execution of instructions with rapid and accurate flushing of the write buffer in the event of an unsuccessful prediction.

While the invention has been described herein relative to its preferred embodiments, it is of course contemplated that modifications of, and alternatives to, these embodiments, such modifications and alternatives obtaining the advantages and benefits of this invention, will be apparent to those of ordinary skill in the art having reference to this specification and its drawings. It is contemplated that such modifications and alternatives are encompassed within the scope of this invention.

## Claims

1. A microprocessor comprising:
central processing means (20) for processing data according to operations defined by instructions to be executed in a program order;
a write buffer (29) coupled to the central processing means (20) for receiving instruction results, the write buffer including a plurality of buffer entries (152), each write buffer entry being arranged in first and second sections (152x, 152y);
a cache memory (60) that has a plurality of memory locations and is coupled to the write buffer (29) for receiving data therefrom, and to the central processing means (20) for presenting data thereto;
a bus (DATA, ADS) coupled to the central processing means (20), the write buffer (29), and the cache memory (60); and
control logic means (150) for controlling the write buffer (29) so that instruction results stored therein are presented to the cache memory (60) in program order,
wherein:
each buffer entry in said first and second sections (152x, 152y) includes a plurality of cross-dependency bits (XDEP), each cross-dependency bit corresponding to one of the buffer entries in the respective second and first sections (152x, 152y) and indicating, when set, that the corresponding buffer entry was allocated in advance thereof and its contents have not yet been presented to said cache; and
said control logic means (150) is operable to present the data of each write buffer entry (152) to said cache only when its cross-dependency control bits (XDEP) are clear.

2. A microprocessor according to claim 1, wherein the central processing means includes first and second pipelines (102, 104) and said first and second sections (152x, 152y) of the write buffer entries are associated with the respective first and second pipelines.

3. A microprocessor according to claim 1 or claim 2, wherein said write buffer entries or write buffer entry sections (152) each comprises a data portion to receive operation results and an address portion to store physical memory addresses at which results are stored.

4. A microprocessor according to any of claims 1 - 3, wherein
said central processing means (20) is operable to process data according to operations defined by a first type of program instructions;
said microprocessor also including secondary processing means (70) operable to process data according to operations defined by a second type of program instructions, the secondary processing means providing results having a data word greater in bit width than that provided by the central processing means (20); and including
secondary data latch means (166) for storing results of the secondary processing means that are written to memory at a physical address stored in a buffer entry; and routing means (163) for routing the data portion of the write buffer entry (152) or contents of the secondary data latch means, to the cache memory (60).

5. A microprocessor according to any of claims 1-4, further comprising:
misaligned write control logic (150) coupled to the bus, to detect whether an instruction is a misaligned write instruction;
a shifter (164) coupled to the write buffer (29) to shift the contents of a first entry of the plurality of entries detected as a misaligned write instruction by the misaligned write control logic (150), prior to presentation of the first entry to the cache memory (60); and
a misaligned write latch (162) coupled to the shifter and to the cache memory (60) to latch the shifted contents of the first entry of the plurality of entries and to present the data corresponding to the misaligned write to the cache memory (60) in first and second write cycles.

6. The microprocessor of claim 5, wherein each of the plurality of entries in the write buffer (29) includes a misaligned write control bit (MAW) that is set by the misaligned write control logic (150) in response to detection that an instruction is a misaligned write instruction.

7. The microprocessor of claim 6, wherein the misaligned write control logic (150) further sets the misaligned write control bit (MAW) in all of the plurality of entries responsive to detecting the misaligned write instruction.

8. The microprocessor of claim 7, wherein the misaligned write control logic (150) further loads the first entry of the plurality of entries with a physical address in response to the write operation being detected as a misaligned write, and further loads a second entry of the plurality of entries with a higher order physical address from that stored in the first entry of the plurality of entries to serve as the address for the second write cycle.

9. A microprocessor according to any of claims 1 - 8, further comprising:
gathered write control logic means (150) for detecting that first and second instructions include memory writes to addresses in the same byte group; and
gathered write latch means (165) for storing a data portion of the first and second instructions responsive to the gathered write control logic means (150), and for presenting its contents to the cache memory (60) in a single write cycle.

10. A microprocessor according to any of claims 1 - 9, wherein
said central processing means (20) comprises central processing pipeline means (102, 104) for processing data according to operations defined by program instructions so that a writeback stage (WB) and an address calculation stage (AC) of a first and a second program instruction, respectively, are processed substantially simultaneously;
read after write control logic means (150) for comparing a physical address of a read operation requested by the second instruction in the address calculation stage (AC) to addresses associated with each of the plurality of buffer entries (152) to detect a read-after-write data dependency between the first and second instructions.

11. A microprocessor according to any of claims 1 - 10, wherein each of the plurality of buffer entries (152) includes at least one speculation control bit (SPEC) indicating, when set, that data to be written to its buffer entry is from execution of an instruction in a predicted branch in program sequence after an instruction of the conditional branch type; and
speculation control logic (150) for controlling the presentation of data by the write buffer (29) to the cache memory (60) so that each write buffer entry (152) presents data to the cache memory (60) only if the speculation control bit is not set.

12. A method of buffering results of data processing operations executed by a microprocessor central processing unit (20) according to a series of instructions in a program order, comprising:
(a) for each of a plurality of instructions, determining a physical address to which instruction results are to be written (170), and for each such physical address, storing the determined physical address into one of a plurality of write buffer entries (176), each write buffer entry being arranged in first and second sections (152x, 152y);
(b) executing the instructions (190);
(c) storing the executed instruction results into the write buffer entries (152) in which are stored the corresponding physical addresses for the respective instructions (194); and
(d) retrieving, in the program order, the stored results from the write buffer entries (200), for storage in the cache memory (60) at a location associated with the stored memory address (210);
wherein:
each buffer entry in said first and second sections (152x, 152y) includes a plurality of cross-dependency bits (XDEP), each cross-dependency bit corresponding to one of the buffer entries in the respective second and first sections (152x, 152y) and indicating, when set, that the corresponding buffer entry was allocated in advance thereof and its contents have not yet been presented to said cache; and
the data of each write buffer entry (152) is retrieved from the write buffer entries only when its cross-dependency control bits (XDEP) are clear.

13. A method according to claim 14, wherein said first and second sections (152x, 152y) are associated with respective pipelines of the central processing unit.

14. A method according to claim 12 or claim 13, wherein for processing a misaligned write operation:
said step (a) is effected by initially identifying whether an instruction is a misaligned write operation (281), and determining a first physical memory address of a first portion to which results of an identified misaligned write operation are to be written, storing the first physical memory address in a first write buffer entry (286), and determining a second physical memory address of a second portion to which results of an identified misaligned write operation are to be written;
in step (b) executing the misaligned write operation (190);
in step (c) storing the first and second portions of the executed operation results in the first write buffer entry (152) and latching the first and second portions of the operation results from the first write buffer entry (152) into a latch (292); and
in step (d) presenting the first physical address and the first latched portion of the operation results to the cache memory (60) in a first write cycle (294); and presenting the second physical address and the second latched portion of the operation results to the cache memory (60) in a second write cycle (296).

15. The method of claim 14, wherein the first physical address corresponds to a lower order address than the second physical address.

16. The method of claim 15, further comprising, prior to step (d), shifting the first and second portions of the instruction results so that the first portion of the instruction results resides in higher order byte positions than the second portion of the instruction results.

17. The method of claim 16, further comprising in response to identification that an instruction is a misaligned write operation, setting a misaligned write control bit in the first write buffer entry (152) to indicate that the write operation thereto will be a misaligned write (284).

18. The method of claim 17, wherein the latching of the first and second portions of the instruction results is performed responsive to the misaligned write control bit (MAW) being set in the first write buffer entry (292).

19. A method according to any of claims 12 - 18, wherein for processing writes to memory and non-cacheable reads from memory:
said step (a) includes storing the determined physical address into one of a plurality of write buffer entries (152) and setting an address valid control bit (AV) in the write buffer entry (152) in which the physical address is stored, determining the physical address of the memory location from which the non-cacheable read is to be accessed for each non-cacheable read instruction (312), and loading a non-cacheable read dependency field (310) having a plurality of bit positions (314), each bit position corresponding to one of the write buffer entries (152), with the state of the address valid control bits for the corresponding write buffer entry (152);
and in said step (d) also includes clearing the bit in the non-cacheable read dependency field corresponding to the retrieved write buffer entry (152), and performing the non-cacheable read (320), responsive to the non-cacheable read dependency field being clear.

20. A method according to any of claims 12 - 19, of buffering results of data processing operations executed by a pipelined microprocessor, comprising for data that is communicated in a byte group from the write buffer (29) to the cache memory (60) in a write cycle,
in step (a) detecting that first and second instructions include memory writes to addresses in the same byte group (299); determining first and second physical memory addresses to which results of the instruction are to be written in memory; and storing the first and second physical addresses in first and second write buffer entries (152), respectively (302);
in step (c) storing and latching the results of the first and second instructions in the first and second write buffer entries (152), respectively (304); and
in step (d) presenting a physical address corresponding to the byte group of the first and second physical addresses and the said latched results to the cache memory (60) in a write cycle (308).

21. A method according to any of claims 12 - 20, wherein:
said step (a) comprises determining a first memory address for storage of results of a first instruction and storing that first memory address in a first entry of a plurality of write buffer entries (152), determining a second memory address from which data is to be read for a second instruction, the second instruction being later in program order than the first instruction, and comparing that second memory address against the first memory address stored in the first entry of the plurality of write buffer entries (152) to detect a match;
in step (e) executing a first instruction to produce a first result (190);
in step (c) storing the first result in the first write buffer entry (194); and,
in step (d) retrieving the first result from the first write buffer entry (200) for storage in the cache memory (60) at a location associated with the first memory address (210).

22. A method according to any of claims 12 - 21, wherein for executing data operations by a pipelined microprocessor according to a series of instructions including at least one conditional branch instruction:
step (a) includes detecting a conditional branch instruction; predicting a first sequence of instructions to be executed prior to determining the state of a condition upon which step said detection depends; for an instruction in a predicted first sequence corresponding to a write to memory, determining a first physical memory address to which results are to be written in memory; and storing the first physical address in a first write buffer entry (242);
step (b) includes executing the write to memory instruction predicted in step (a) (244);
step (c) includes storing the results of step (b) in the first write buffer entry (152); determining the condition upon which the conditional branch instruction depends, and in response to such determination, indicating that said prediction was correct (260); and
step (d) includes retrieving the results of the first write buffer entry (152) for storage in the cache memory (60).

23. A method according to any of claims 12 - 22, wherein for buffering results of data processing operations executed by said central processing means (20) and a secondary processing means (70), wherein a said write buffer entry (152) has a data portion and an address portion, and wherein results of the secondary processing unit operations correspond to data words of greater bit width than that of the data portion of the write buffer entries (152):
effecting said step (a) by determining a first memory address to store results of a first instruction (170), and storing the first memory address determined in the address portion of a first write buffer entry (176);
effecting said step (b) by executing a first instruction with either the central processing means (20) or the secondary processing means (70);
in said step (c), in response to the secondary processing unit executing the first instruction, storing results in a secondary data latch (166) having a wider bit width than the data portion of the plurality of write buffer entries (152), and in response to the central processing unit executing the first instruction, storing the results of the first instruction in the data portion of the first write buffer entry (194);
and effecting said step (d) by retrieving results of the first instruction from the write buffer (29) to store in the cache memory (60) by selecting the contents of the secondary data latch (166) if the first instruction was executed by the secondary processing means (70), or selecting the contents of the data portion of the first write buffer entry (152) if the first instruction was executed by the central processing unit (20); and presenting the contents selected in step (f) to the cache memory (60) in combination with the first physical address stored in the first write buffer entry (152).

## Patentansprüche

1. Mikroprozessor, der aufweist:
eine zentrale Verarbeitungseinrichtung (20) zum Verarbeiten von Daten in Übereinstimmung mit Operationen, die durch Anweisungen definiert sind, die in einer Programmfolge auszuführen sind;
einen mit der zentralen Verarbeitungseinrichtung (20) gekoppelten Schreibpuffer (29) zum Empfangen von Anweisungsergebnissen, wobei der Schreibpuffer eine Mehrzahl von Puffereinträgen (152) beinhaltet, wobei jeder Schreibpuffereintrag in ersten und zweiten Abschnitten (152x, 152y) angeordnet ist;
einen Cache-Speicher (60), der eine Mehrzahl von Speicherstellen aufweist und zum Empfangen von Daten von dem Schreibpuffer (29) mit diesem und zum Übergeben von Daten zu der zentralen Verarbeitungseinrichtung (20) mit dieser gekoppelt ist;
einen Bus (DATA, ADS), der mit der zentralen Verarbeitungseinrichtung (20), dem Schreibpuffer (29) und dem Cache-Speicher (60) gekoppelt ist; und
eine Steuerlogikeinrichtung (150) zum derartigen Steuern des Schreibpuffers (29), daß in ihm gespeicherte Anweisungsergebnisse in einer Programmfolge zu dem Cache-Speicher (60) übergeben werden,
wobei:
jeder Puffereintrag in den ersten und zweiten Abschnitten (152x, 152y) eine Mehrzahl von Kreuzabhängigkeitsbits (XDEP) beinhaltet, wobei jedes Kreuzabhängigkeitsbit einem der Puffereinträge in den jeweiligen zweiten und ersten Abschnitten (152x, 152y) entspricht und, wenn es gesetzt ist, anzeigt, daß der entsprechende Puffereintrag im voraus davon zugewiesen worden ist und seine Inhalte noch nicht an den Cache übergeben worden sind; und
die Steuerlogikeinrichtung (150) derart arbeitet, daß sie die Daten von jedem Schreibpuffereintrag (152) lediglich an den Cache übergibt, wenn seine Kreuzabhängigkeitssteuerbits (XDEP) gelöscht sind.

2. Mikroprozessor nach Anspruch 1, wobei die zentrale Verarbeitungseinrichtung erste und zweite Hauptleitungen (102, 104) beinhaltet und die ersten und zweiten Abschnitte (152x, 152y) der Schreibpuffereinträge den ersten bzw. zweiten Hauptleitungen zugewiesen sind.

3. Mikroprozessor nach Anspruch 1 oder Anspruch 2, wobei die Schreibpuffereinträge oder Schreibpuffereintragsabschnitte (152) jeweils einen Datenabschnitt, um Operationsergebnisse zu empfangen, und einen Adreßabschnitt aufweisen, um physikalische Speicheradressen zu speichern, an welchen Ergebnisse gespeichert sind.

4. Mikroprozessor nach einem der Ansprüche 1 bis 3, wobei
die zentrale Verarbeitungseinrichtung (20) derart arbeitet, daß sie Daten in Übereinstimmung mit Operationen verarbeitet, die durch einen ersten Typ von Programmanweisungen definiert sind;
der Mikroprozessor ebenso eine sekundäre Verarbeitungseinrichtung (70) beinhaltet, die derart arbeitet, daß sie Daten in Übereinstimmung mit Operationen verarbeitet, die durch einen zweiten Typ von Programmanweisungen definiert sind, wobei die sekundäre Verarbeitungseinrichtung Ergebnisse liefert, die ein Datenwort aufweisen, das eine größere Bitbreite als das aufweist, das von der zentralen Verarbeitungseinrichtung (20) geliefert wird; und die
eine sekundäre Datenverriegelungseinrichtung (166) zum Speichern von Ergebnissen der sekundären Verarbeitungseinrichtung, die an einer physikalischen Adresse, die in einem Puffereintrag gespeichert ist, in einen Speicher geschrieben werden; und
eine Leiteinrichtung (163) zum Leiten des Datenabschnitts des Schreibpuffereintrags (152) oder von Inhalten der sekundären Datenverriegelungseinrichtung zu dem Cache-Speicher (60) beinhaltet.

5. Mikroprozessor nach einem der Ansprüche 1 bis 4, der weiterhin aufweist:
eine Schreibversatzsteuerlogik (150), die mit dem Bus gekoppelt ist, um zu erfassen, ob eine Anweisung eine versetzte Schreibanweisung ist;
eine Schiebeeinrichtung (164), die mit dem Schreibpuffer (29) gekoppelt ist, um die Inhalte eines ersten Eintrags der Mehrzahl von Einträgen, der von der Schreibversatzsteuerlogik (150) als eine versetzte Schreibanweisung erfaßt wird, vor einem Übergeben des ersten Eintrags zu dem Cache-Speicher (60) zu verschieben; und
einen Schreibversatzverriegelungsspeicher (162), der mit der Schiebeeinrichtung und dem Cache-Speicher (60) gekoppelt ist, um die verschobenen Inhalte des ersten Eintrags der Mehrzahl von Einträgen zu verriegeln und die Daten, die dem versetzten Schreiben zu dem Cache-Speicher (60) entsprechen, in ersten und zweiten Schreibzyklen zu übergeben.

6. Mikrocomputer nach Anspruch 5, wobei jeder der Mehrzahl von Einträgen in dem Schreibpuffer (29) ein Schreibversatzsteuerbit (MAW) beinhaltet, das von der Schreibversatzsteuerlogik (150) als Reaktion auf ein Erfassen gesetzt wird, daß eine Anweisung eine Schreibversatzanweisung ist.

7. Mikroprozessor nach Anspruch 6, wobei die Schreibversatzsteuerlogik (150) weiterhin das Schreibversatzsteuerbit (MAW) in allen der Mehrzahl von Einträgen als Reaktion auf ein Erfassen der Schreibversatzanweisung setzt.

8. Mikrocomputer nach Anspruch 7, wobei die Schreibversatzsteuerlogik (150) weiterhin den ersten Eintrag der Mehrzahl von Einträgen mit einer physikalischen Adresse als Reaktion auf die Schreiboperation, die als ein versetztes Schreiben erfaßt wird, lädt und weiterhin einen zweiten Eintrag der Mehrzahl von Einträgen mit einer physikalischen Adresse einer höheren Ordnung als der, die in dem ersten Eintrag der Mehrzahl von Einträgen gespeichert ist, lädt, um als die Adresse für den zweiten Schreibzyklus zu dienen.

9. Mikroprozessor nach einem der Ansprüche 1 bis 8, der weiterhin aufweist:
eine Sammelschreibsteuerlogikeinrichtung (150) zum Erfassen, daß erste und zweite Anweisungen ein Speicherschreiben in Adressen in der gleichen Bytegruppe beinhalten;
eine Sammelschreibverriegelungseinrichtung (165) zum Speichern eines Datenabschnitts der ersten und zweiten Anweisungen als Reaktion auf die Sammelschreibsteuerlogikeinrichtung (150) und zum Übergeben ihrer Inhalte zu dem Cache-Speicher (60) in einem einzigen Schreibzyklus.

10. Mikroprozessor nach einem der Ansprüche 1 bis 9, wobei
die zentrale Verarbeitungseinrichtung (20) eine Zentralverarbeitungshauptleitungseinrichtung (102, 104) zum derartigen Verarbeiten von Daten in Übereinstimmung mit Operationen aufweist, die durch Programmanweisungen definiert sind, daß eine Zurückschreibstufe (WB) und eine Adreßberechnungsstufe (AC) einer ersten bzw. einer zweiten Programmanweisung im wesentlichen gleichzeitig verarbeitet werden;
eine Lese-Nach-Schreib-Steuerlogikeinrichtung (150) zum Vergleichen einer physikalischen Adresse einer Leseoperation, die von der zweiten Anweisung in der Adreßberechnungsstufe (AC) angefordert wird, mit Adressen, die jedem der Mehrzahl von Puffereinträgen (152) zugewiesen sind, um eine Lese-Nach-Schreib-Datenabhängigkeit zwischen den ersten und zweiten Anweisungen zu erfassen.

11. Mikroprozessor nach einem der Ansprüche 1 bis 10, wobei jede der Mehrzahl von Puffereinträgen (152) mindestens ein Spekulationssteuerbit (SPEC) beinhaltet, das, wenn es gesetzt ist, anzeigt, daß Daten, die in ihren Puffereintrag zu schreiben sind, von einem Ausführen einer Anweisung in einem vorausgesagten Zweig in einer Programmfolge nach einer Anweisung des Typs einer bedingten Verzweigung stammen; und
eine Spekulationssteuerlogik (150) zum derartigen Steuern des Übergebens von Daten durch den Schreibpuffer (29) zu dem Cache-Speicher (60), daß jeder Schreibpuffereintrag (152) Daten lediglich dann zu dem Cache-Speicher (60) übergibt, wenn das Spekulationssteuerbit nicht gesetzt ist.

12. Verfahren zum Puffern von Ergebnissen von Datenverarbeitungsoperationen, die von einer zentralen Verarbeitungseinheit (20) eines Mikroprozessors in Übereinstimmung mit einer Reihe von Anweisungen in einer Programmfolge ausgeführt werden, das aufweist:
**(a)** Bestimmen einer physikalischen Adresse, zu welcher Anweisungsergebnisse zu schreiben sind, für jede einer Mehrzahl von Anweisungen (170) und zum Speichern der bestimmten physikalischen Adresse in einen einer Mehrzahl von Schreibpuffereinträgen für jede derartige physikalische Adresse (176), wobei jeder Schreibpuffereintrag in ersten und zweiten Abschnitten (152x, 152y) angeordnet ist;
**(b)** Ausführen der Anweisungen (190);
**(c)** Speichern der ausgeführten Anweisungsergebnisse in den Schreibpuffereinträgen (152), in welchen die entsprechenden physikalischen Adressen für die jeweiligen Anweisungen gespeichert sind (194); und
**(d)** Abrufen der gespeicherten Ergebnisse aus den Schreibpuffereinträgen (200) in der Programmfolge zum Speichern in dem Cache-Speicher (60) an einer Stelle, die der gespeicherten Speicheradresse zugehörig ist (210);
wobei:
jeder Puffereintrag in den ersten und zweiten Abschnitten (152x, 152y) eine Mehrzahl von Kreuzabhängigkeitsbits (XDEP) aufweist, wobei jedes Kreuzabhängigkeitsbit einem der Puffereinträge in den zweiten bzw. ersten Abschnitten (152x, 152y) entspricht und, wenn es gesetzt ist, anzeigt, daß der entsprechende Puffereintrag im voraus davon zugewiesen worden ist und seine Inhalte noch nicht zu dem Cache übergeben worden sind; und
die Daten von jedem Schreibpuffereintrag (152) lediglich von den Schreibpuffereinträgen abgerufen werden, wenn seine Kreuzabhängigkeitssteuerbits (XDEP) gelöscht sind.

13. Verfahren nach Anspruch 14, wobei die ersten und zweiten Abschnitte (152x, 152y) jeweiligen Hauptleitungen der zentralen Verarbeitungseinheit zugewiesen sind.

14. Verfahren nach Anspruch 12 oder Anspruch 13, wobei zum Verarbeiten einer Schreibversatzoperation:
der Schritt **(a)** durch anfängliches Identifizieren, ob eine Anweisung eine Schreibversatzoperation ist, (281) und Bestimmen einer ersten physikalischen Speicheradresse eines ersten Abschnitts, in welche Ergebnisse einer identifizierten Schreibversatzoperation zu schreiben sind, Speichern der ersten physikalischen Speicheradresse in einen ersten Schreibpuffereintrag (286) und Bestimmen einer zweiten physikalischen Speicheradresse eines zweiten Abschnitts, in welchen Ergebnisse einer identifizierten Schreibversatzoperation zu schreiben sind, bewirkt wird;
in Schritt **(b)** die Schreibversatzoperation ausgeführt wird (190);
in Schritt **(c)** die ersten und zweiten Abschnitte der ausgeführten Operationsergebnisse in den ersten Schreibpuffereintrag (152) gespeichert werden und die ersten und zweiten Abschnitte der Operationsergebnisse aus dem ersten Schreibpuffereintrag (152) in einem Verriegelungsspeicher verriegelt werden (292); und
in Schritt **(d)** die erste physikalische Adresse und der erste verriegelte Abschnitt der Operationsergebnisse in einem ersten Schreibzyklus zu dem Cache-Speicher (60) übergeben werden (294); und die zweite physikalische Adresse und der zweite verriegelte Abschnitt der Operationsergebnisse in einem zweiten Schreibzyklus zu dem Cache-Speicher (60) übergeben werden (296).

15. Verfahren nach Anspruch 14, wobei die erste physikalische Adresse einer Adresse einer niedrigeren Ordnung als die zweite physikalische Adresse entspricht.

16. Verfahren nach Anspruch 15, das weiterhin vor dem Schritt **(b)** ein derartiges Verschieben der ersten und zweiten Abschnitte der Anweisungsergebnisse aufweist, daß der erste Abschnitt der Anweisungsergebnisse an Bytepositionen einer höheren Ordnung als der zweite Abschnitt der Anweisungsergebnisse vorhanden ist.

17. Verfahren nach Anspruch 16, das weiterhin als Reaktion auf ein Identifizieren, daß eine Anweisung eine Schreibversatzoperation ist, ein Setzen eines Schreibversatzsteuerbits in dem ersten Schreibpuffereintrag (152) aufweist, um anzuzeigen, daß die Schreiboperation von diesem ein versetztes Schreiben (284) sein wird.

18. Verfahren nach Anspruch 17, wobei das Verriegeln der ersten und zweiten Abschnitte der Anweisungsergebnisse als Reaktion auf das Schreibversatzsteuerbit (MAW) durchgeführt wird, das in dem ersten Puffereintrag (292) gesetzt ist.

19. Verfahren nach einem der Ansprüche 12 bis 18, wobei zum Verarbeiten von Schreiben zu einem Speicher und einem Lesen ohne Cache aus dem Speicher:
der Schritt **(a)** ein Speichern der bestimmten physikalischen Adresse in einen einer Mehrzahl von Schreibpuffereinträgen (152) und zum Setzen eines Adreßgültigkeitssteuerbits (AV) in dem Schreibpuffereintrag (152), in welchem die physikalische Adresse gespeichert ist, ein Bestimmen der physikalischen Adresse der Speicherstelle, aus welcher das Lesen ohne Cache für jede Leseanweisung ohne Cache abzurufen ist, (312) und zum Laden eines Leseabhängigkeitsfelds (310) ohne Cache, das eine Mehrzahl von Bitpositionen aufweist (314), wobei jede Bitposition einem der Schreibpuffereinträge (152) entspricht, mit dem Zustand des Adreßgültigkeitssteuerbits für den entsprechenden Schreibpuffereintrag (152) beinhaltet;
und in dem Schritt **(d)** ebenso ein Löschen des Bits in dem Leseabhängigkeitsfeld ohne Cache, das dem abgerufenen Speicherpuffereintrag (152) entspricht, und ein Durchführen des Lesens (320) ohne Cache als Reaktion auf das gelöschte Leseabhängigkeitsfeld ohne Cache beinhaltet.

20. Verfahren nach einem der Ansprüche 12 bis 19 zum Puffern von Ergebnissen von Datenverarbeitungsoperationen, die von einem Fließband-Mikroprozessor ausgeführt werden, der für Daten, die in einer Bytegruppe von dem Schreibpuffer (29) zu dem Cache-Speicher (60) in einem Schreibzyklus übertragen werden,
in Schritt **(a)** ein Erfassen, das erste und zweite Anweisungen, die Speicherschreibvorgänge zu Adressen in der gleichen Bytegruppe beinhalten (299); ein Bestimmen von ersten und zweiten physikalischen Speicheradressen, zu welchen Ergebnisse der Anweisung in den Speicher zu schreiben sind; und ein Speichern der ersten und zweiten physikalischen Adressen in erste bzw. zweite Schreibpuffereinträge (152) (302);
in Schritt **(c)** ein Speichern und Verriegeln der Ergebnisse der ersten und zweiten Anweisungen in die ersten bzw. zweiten Schreibpuffereinträgen (152) (304); und
in Schritt **(d)** ein Übergeben einer physikalischen Adresse, die der Bytegruppe der ersten und zweiten physikalischen Adressen entspricht, und der verriegelten Ergebnisse zu dem Cache-Speicher (60) in einem Schreibzyklus beinhaltet (308).

21. Verfahren nach einem der Ansprüche 12 bis 20, wobei:
der Schritt **(a)** ein Bestimmen einer ersten Speicheradresse zum Speichern von Ergebnissen einer ersten Anweisung und zum Speichern der ersten Speicheradresse in einen ersten Eintrag einer Mehrzahl von Schreibpuffereinträgen (152), ein Bestimmen einer zweiten Speicheradresse, aus welcher Daten für eine zweite Anweisung zu lesen sind, wobei die zweite Anweisung in einer Programmfolge später als die erste Anweisung ist, und ein Vergleichen der zweiten Speicheradresse mit der ersten Speicheradresse beinhaltet, die in dem ersten Eintrag der Mehrzahl von Schreibpuffereinträgen (152) gespeichert ist, um eine Übereinstimmung zu erfassen;
in Schritt **(e)** eine erste Anweisung ausgeführt wird, um ein erstes Ergebnis zu erzeugen (190);
in Schritt **(c)** das erste Ergebnis in den ersten Schreibpuffereintrag gespeichert wird (194); und
in Schritt **(d)** das erste Ergebnis aus dem ersten Schreibpuffereintrag (200) zum Speichern in den Cache-Speicher (60) an einer Stelle abgerufen wird, die der ersten Speicheradresse zugehörig ist (210).

22. Verfahren nach einem der Ansprüche 12 bis 21, wobei zum Ausführen von Datenoperationen durch einen Fließband-Mikroprozessor in Übereinstimmung mit einer Reihe von Anweisungen, die mindestens eine Anweisung einer bedingten Verzweigung beinhalten:
Schritt **(a)** ein Erfassen einer Anweisung einer bedingten Verzweigung; ein Voraussagen einer ersten Anweisungsfolge, die vor einem Bestimmen des Zustands einer Bedingung auszuführen ist, wobei von diesem Schritt das Erfassen abhängt; ein Bestimmen einer ersten physikalischen Speicheradresse, zu welcher Ergebnisse in den Speicher zu schreiben sind für eine Anweisung in einer vorausgesagten ersten Folge, die einem Schreiben zu dem Speicher entspricht; und ein Speichern der ersten physikalischen Adresse in einen ersten Schreibpuffereintrag (242) beinhaltet;
Schritt **(b)** ein Ausführen des Schreibens zu einer Speicheranweisung, die in Schritt **(a)** vorausgesagt wird, beinhaltet (244);
Schritt **(c)** ein Speichern der Ergebnisse von Schritt **(b)** in den ersten Schreibpuffereintrag (152); ein Bestimmen der Bedingung, von welcher die Anweisung einer bedingten Verzweigung abhängt, und ein Anzeigen, daß die Voraussage korrekt war, als Reaktion auf ein derartiges Bestimmen beinhaltet (260); und
Schritt **(d)** ein Abrufen der Ergebnisse des ersten Schreibpuffereintrags (152) zum Speichern in dem Cache-Speicher (60) beinhaltet.

23. Verfahren nach einem der Ansprüche 12 bis 22, wobei zum Puffern von Ergebnissen von Datenverarbeitungsoperationen, die von der zentralen Verarbeitungseinrichtung (20) und einer sekundären Verarbeitungseinrichtung (70) ausgeführt werden, wobei ein Schreibpuffereintrag (152) einen Datenabschnitt und einen Adreßabschnitt aufweist und wobei Ergebnisse der Verarbeitungen der sekundären Verarbeitungseinheit Datenwörtern einer größeren Bitbreite als die des Datenabschnitts der Schreibpuffereinträge (152) entsprechen:
der Schritt **(a)** durch Bestimmen einer ersten Speicheradresse, um Ergebnisse einer ersten Anweisung (170) zu speichern, und Speichern der ersten Speicheradresse, die in dem Adreßabschnitt eines ersten Schreibpuffereintrags (176) bestimmt wird, bewirkt wird;
der Schritt **(b)** durch Ausführen einer ersten Anweisung mit entweder der zentralen Verarbeitungseinrichtung (20) oder der sekundären Verarbeitungseinrichtung (70) bewirkt wird;
in dem Schritt **(c)** als Reaktion auf die sekundäre Verarbeitungseinheit, die die erste Anweisung ausführt, Ergebnisse in einem sekundären Datenverriegelungsspeicher (166), der eine größere Bitbreite als die des Datenabschnitts der Mehrzahl von Schreibpuffereinträgen (152) aufweist, gespeichert werden und als Reaktion auf die zentrale Verarbeitungseinheit, die die erste Anweisung ausführt, die Ergebnisse der ersten Anweisung in den Datenabschnitt des ersten Schreibpuffereintrags (194) gespeichert werden;
und der Schritt **(d)** durch Abrufen von Ergebnissen der ersten Anweisung aus dem Schreibpuffer (29), um in den Cache-Speicher (60) durch Auswählen der Inhalte des sekundären Datenverriegelungsspeichers (166) zu speichern, wenn die erste Anweisung von der sekundären Verarbei-tungseinrichtung (70) ausgeführt worden ist, oder Auswählen der Inhalte des Datenabschnitts des ersten Schreibpuffereintrags (152), wenn die erste Anweisung von der zentralen Verarbeitungseinheit (20) ausgeführt worden ist; und ein Übergeben der Inhalte, die in dem Schritt **(f)** ausgewählt worden sind, zu dem Cache-Speicher (60) in Kombination mit der ersten physikalischen Adresse bewirkt wird, die in dem ersten Schreibpuffereintrag (152) gespeichert ist.

## Revendications

1. Microprocesseur comprenant :
un moyen central de traitement (20) destiné à traiter des données selon des opérations définies par des instructions à exécuter dans l'ordre d'un programme ;
un tampon (29) d'écriture raccordé au moyen central de traitement (20), destiné à recevoir des résultats d'instruction, le tampon d'écriture contenant une pluralité d'entrées (152) de tampon, chaque entrée de tampon d'écriture étant agencée en des première et seconde sections (152x, 152y) ;
une antémémoire (60) qui comporte une pluralité d'emplacements de mémoire et qui est raccordée au tampon (29) d'écriture pour en recevoir des données, et au moyen central de traitement (20) pour lui présenter des données ;
un bus (DATA, ADS) raccordé au moyen central de traitement (20), au tampon (29) d'écriture et à l'antémémoire (60) ; et
un moyen logique (150) de commande destiné à commander le tampon (29) d'écriture de façon que des résultats d'instruction qui y sont mémorisés soient présentés à l'antémémoire (60) dans l'ordre du programme,
dans lequel :
chaque entrée de tampon dans lesdites première et seconde sections (152x, 152y) comprend une pluralité de bits (XDEP) de dépendance croisée, chaque bit de dépendance croisée correspondant à l'une des entrées de tampon dans les seconde et première sections (152x, 152y) respectives et indiquant, lorsqu'il est à un, que l'entrée de tampon correspondante a été affectée à l'avance et que son contenu n'a pas encore été présenté à ladite antémémoire ; et
dans lequel ledit moyen logique (150) de commande est utilisable pour présenter les données de chaque entrée (152) de tampon d'écriture à ladite antémémoire seulement lorsque ses bits (XDEP) de commande de dépendance croisée sont à zéro.

2. Microprocesseur selon la revendication 1, dans lequel le moyen central de traitement comprend des premier et second pipelines (102, 104) et dans lequel lesdites première et seconde sections (152x, 152y) des entrées de tampon d'écriture sont associées aux premier et second pipelines respectifs.

3. Microprocesseur selon la revendication 1 ou la revendication 2, dans lequel lesdites entrées de tampon d'écriture ou les sections (152) d'entrée de tampon d'écriture comprennent chacune une portion de données pour recevoir des résultats d'opération et une portion d'adresse pour mémoriser des adresses physiques de mémoire auxquelles sont mémorisés les résultats.

4. Microprocesseur selon l'une quelconque des revendications 1 à 3, dans lequel :
ledit moyen central de traitement (20) est utilisable pour traiter des données selon des opérations définies par un premier type d'instructions de programme ;
ledit microprocesseur comprenant aussi un moyen secondaire de traitement (70) qui est utilisable pour traiter des données selon des opérations définies par un second type d'instructions de programme, le moyen secondaire de traitement fournissant des résultats ayant un mot de donnée plus grand, en nombre de bits, que celui fourni par le moyen central de traitement (20) ; et incluant :
un moyen secondaire (166) de verrouillage de données destiné à mémoriser des résultats du moyen secondaire de traitement qui sont écrits dans la mémoire à des adresses physiques mémorisées dans une entrée de tampon ; et un moyen (163) d'acheminement destiné à acheminer, à l'antémémoire (60), la portion de données de l'entrée (152) de tampon d'écriture ou le contenu du moyen secondaire de verrouillage de données.

5. Microprocesseur selon l'une quelconque des revendications 1 à 4, comprenant en outre :
une logique (150) de commande d'écriture désalignée raccordée au bus, pour détecter si une instruction est une instruction d'écriture désalignée ;
un décaleur (164) raccordé au tampon (29) d'écriture pour décaler le contenu d'une première entrée de la pluralité d'entrées, détecté comme étant une instruction d'écriture désalignée par la logique (150) de commande d'écriture désalignée, avant présentation de la première entrée à l'antémémoire (60) ; et
un verrou (162) d'écriture désalignée raccordé au décaleur et à l'antémémoire (60) pour verrouiller le contenu décalé de la première entrée de la pluralité d'entrées et pour, dans des premier et second cycles d'écriture, présenter, à l'antémémoire (60), les données correspondant à l'écriture désalignée.

6. Microprocesseur selon la revendication 5, dans lequel chacune de la pluralité d'entrées dans le tampon (29) d'écriture comprend un bit (MAW) de commande d'écriture désalignée qui est mis à un par la logique (150) de commande d'écriture désalignée en réponse à la détection du fait qu'une instruction est une instruction d'écriture désalignée.

7. Microprocesseur selon la revendication 6, dans lequel la logique (150) de commande d'écriture désalignée met, en outre, à un le bit (MAW) de commande d'écriture désalignée dans la totalité de la pluralité d'entrées, en réponse à la détection de l'instruction d'écriture désalignée.

8. Microprocesseur selon la revendication 7, dans lequel la logique (150) de commande d'écriture désalignée charge, en outre, la première entrée de la pluralité d'entrées avec une adresse physique, en réponse à l'opération d'écriture qui est détectée comme une écriture désalignée, et charge, en outre, une seconde entrée de la pluralité d'entrées avec une adresse physique d'ordre plus élevé que celle mémorisée dans la première entrée de la pluralité d'entrées, pour servir d'adresse pour le second cycle d'écriture.

9. Microprocesseur selon l'une quelconque des revendications 1 à 8, comprenant en outre :
un moyen logique (150) de commande d'écriture regroupée, destiné à détecter que des première et seconde instructions comprennent des écritures en mémoire à des adresses dans le même groupe d'octets ; et
un moyen (165) de verrouillage d'écriture regroupée, destiné à mémoriser une portion de données des première et seconde instructions en réponse au moyen logique (150) de commande d'écriture regroupée, et à présenter son contenu à l'antémémoire (60) dans un même cycle d'écriture.

10. Microprocesseur selon l'une quelconque des revendications 1 à 9, dans lequel :
ledit moyen central de traitement (20) comprend un moyen central de traitement formant pipeline (102, 104) destiné à traiter des données selon des opérations définies par des instructions de programme de façon à traiter sensiblement en même temps, respectivement, un stade (WB) d'écriture différée et un stade (AC) de calcul d'adresse d'une première et d'une seconde instruction de programme ;
un moyen logique (150) de commande de lecture après écriture destiné à comparer une adresse physique d'une opération de lecture demandée par la seconde instruction au stade (AC) de calcul d'adresse à des adresses associées à chacune de la pluralité d'entrées (152) de tampon, pour détecter une dépendance de données de lecture après écriture entre les première et seconde instructions.

11. Microprocesseur selon l'une quelconque des revendications 1 à 10, dans lequel chacune de la pluralité d'entrées (152) de tampon comprend au moins un bit (SPEC) de commande de spéculation indiquant, lorsqu'il est à un, que des données à écrire dans son entrée de tampon proviennent de l'exécution d'une instruction dans une branche prédite d'une séquence de programme après une instruction du type branchement conditionnel ; et
une logique (150) de commande de spéculation destinée à commander la présentation de données par le tampon (29) d'écriture à l'antémémoire (60), de façon que chaque entrée (152) de tampon d'écriture présente des données à l'antémémoire (60) seulement si le bit de commande de spéculation n'est pas à un.

12. Procédé de mise en tampon de résultats d'opérations de traitement de données exécutées par une unité centrale de traitement (20) de microprocesseur, selon une série d'instructions dans l'ordre d'un programme, comprenant :
(a) pour chacune d'une pluralité d'instructions, la détermination d'une adresse physique à laquelle les résultats d'instruction doivent être écrits (170), et, pour chacune de ces adresses physiques, la mémorisation de l'adresse physique déterminée dans l'une d'une pluralité d'entrées (176) de tampon d'écriture, chaque entrée de tampon d'écriture étant agencée en des première et seconde sections (152x, 152y) ;
(b) l'exécution des instructions (190) ;
(c) la mémorisation des résultats d'instruction exécutée, dans les entrées (152) de tampon d'écriture dans lesquelles sont mémorisées les adresses physiques correspondantes des instructions (194) respectives ; et
(d) la récupération, dans l'ordre du programme, des résultats mémorisés provenant des entrées (200) de tampon d'écriture, pour mémorisation dans l'antémémoire (60) à un emplacement associé à l'adresse (210) de mémoire mémorisée ;
dans lequel :
chaque entrée de tampon dans lesdites première et seconde sections (152x, 152y) comprend une pluralité de bits (XDEP) de dépendance croisée, chaque bit de dépendance croisée correspondant à l'une des entrées de tampon dans les seconde et première sections (152x, 152y) respectives et indiquant, lorsqu'il est à un, que l'entrée de tampon correspondante a été affectée à l'avance et que son contenu n'a pas encore été présenté à ladite antémémoire ; et
dans lequel les données de chaque entrée (152) de tampon d'écriture sont récupérées dans les entrées de tampon d'écriture seulement lorsque ses bits (XDEP) de commande de dépendance croisée sont à zéro.

13. Procédé selon la revendication 14, dans lequel lesdites première et seconde sections (152x, 152y) sont associées à des pipelines respectifs de l'unité centrale de traitement.

14. Procédé selon la revendication 12 ou la revendication 13, dans lequel pour le traitement d'une opération d'écriture désalignée :
ladite étape (a) est effectuée en identifiant initialement si une instruction est une opération (281) d'écriture désalignée, et en déterminant une première adresse physique de mémoire d'une première portion dans laquelle on doit écrire les résultats d'une opération d'écriture désalignée identifiée, en mémorisant la première adresse physique de mémoire dans une première entrée (286) de tampon d'écriture, et en déterminant une seconde adresse physique de mémoire d'une seconde portion dans laquelle on doit écrire les résultats d'une opération d'écriture désalignée identifiée ;
dans l'étape (b) on exécute l'opération (190) d'écriture désalignée ;
dans l'étape (c), on mémorise les première et seconde portions des résultats de l'opération exécutée dans la première entrée (152) de tampon d'écriture et l'on verrouille, dans un verrou (292), les première et seconde portions des résultats d'opération provenant de la première entrée (152) de tampon d'écriture ; et
dans l'étape (d), dans un premier cycle (294) d'écriture, on présente à l'antémémoire (60), la première adresse physique et la première portion verrouillée des résultats d'opération ; et, dans un second cycle (296) d'écriture, on présente, à l'antémémoire (60), la seconde adresse physique et la seconde portion verrouillée des résultats d'opération.

15. Procédé selon la revendication 14, dans lequel la première adresse physique correspond à une adresse d'ordre plus bas que la seconde adresse physique.

16. Procédé selon la revendication 15, comprenant en outre, avant l'étape (d), le décalage des première et seconde portions des résultats d'instruction de façon telle que la première portion des résultats d'instruction réside dans des positions d'octets d'ordre plus élevé que la seconde portion des résultats d'instruction.

17. Procédé selon la revendication 16, comprenant en outre, en réponse à l'identification du fait qu'une instruction est une opération d'écriture désalignée, la mise à un d'un bit de commande d'écriture désalignée dans la première entrée (152) de tampon d'écriture, pour indiquer que l'opération d'écriture dans celui-ci sera une écriture désalignée (284).

18. Procédé selon la revendication 17, dans lequel le verrouillage des première et seconde portions des résultats d'instruction se fait en réponse au bit (MAW) de commande d'écriture désalignée qui est mis à un dans la première entrée (292) de tampon d'écriture.

19. Procédé selon l'une quelconque des revendications 12 à 18, dans lequel pour le traitement d'écritures dans la mémoire et de lectures, dans la mémoire, ne pouvant être mises en antémémoire :
ladite étape (a) comprend la mémorisation de l'adresse physique déterminée dans l'une d'une pluralité d'entrées (152) de tampon d'écriture et la mise à un d'un bit valide (AV) de commande d'adresse dans l'entrée (152) de tampon d'écriture dans lequel est mémorisée l'adresse physique, la détermination de l'adresse physique de l'emplacement de mémoire à partir duquel on doit accéder à la lecture ne pouvant être mise en antémémoire pour chaque instruction (312) de lecture ne pouvant être mise en antémémoire, et le chargement d'une zone (310) de dépendance de lecture ne pouvant être mise en antémémoire, ayant une pluralité de positions (314) de bit, chaque position de bit correspondant à l'une des entrées (152) de tampon d'écriture, avec l'état des bits valides de commande d'adresse pour l'entrée (152) de tampon d'écriture correspondante ;
et, dans ladite étape (d), comprend aussi l'effacement du bit dans la zone de dépendance de lecture ne pouvant être mise en antémémoire, correspondant à l'entrée (152) de tampon d'écriture récupérée, et l'exécution de la lecture (320) ne pouvant être mise en antémémoire, en réponse au fait que la zone de dépendance de lecture ne pouvant être mise en antémémoire est effacée.

20. Procédé selon l'une quelconque des revendications 12 à 19, de mise en tampon de résultats d'opérations de traitement de données exécutées par un microprocesseur à traitement en chevauchement, comprenant, pour des données qui sont communiquées dans un groupe d'octets, du tampon (29) d'écriture à l'antémémoire (60), dans un cycle d'écriture ;
dans l'étape (a), la détection que les première et seconde instructions comprennent des écritures en mémoire à des adresses dans le même groupe (299) d'octets ; la détermination de première et seconde adresses physiques de mémoire auxquelles les résultats de l'instruction doivent être écrits en mémoire ; et la mémorisation des première et seconde adresses physiques dans des première et seconde entrées (152) de tampon d'écriture, respectivement, (302) ;
dans l'étape (c), la mémorisation et le verrouillage des résultats des première et seconde instructions dans les première et seconde entrées (152) de tampon d'écriture, respectivement (304) ; et
dans l'étape (d) , dans un cycle d'écriture (308), la présentation, à l'antémémoire (60), d'une adresse physique correspondant au groupe d'octets des première et seconde adresses physiques et desdits résultats verrouillés.

21. Procédé selon l'une quelconque des revendications 12 à 20, dans lequel :
ladite étape (a) comprend la détermination d'une première adresse de mémoire pour mémorisation de résultats d'une première instruction et la mémorisation de cette première adresse de mémoire dans une première entrée d'une pluralité d'entrées (152) de tampon d'écriture, la détermination d'une seconde adresse de mémoire à partir de laquelle les données doivent être lues pour une seconde instruction, la seconde instruction étant plus tardive dans l'ordre du programme que la première instruction, et la comparaison de cette seconde adresse de mémoire à la première adresse de mémoire mémorisée dans la première entrée de la pluralité d'entrées (152) de tampon d'écriture pour détecter une concordance ;
dans l'étape (e), on exécute une première instruction pour produire un premier résultat (190) ;
dans l'étape (c), on mémorise le premier résultat dans la première entrée (194) de tampon d'écriture ; et,
dans l'étape (d), on récupère le premier résultat à partir de la première entrée (200) de tampon d'écriture pour mémorisation dans l'antémémoire (60) à un emplacement associé à la première adresse (210) de mémoire.

22. Procédé selon l'une quelconque des revendications 12 à 21, dans lequel, pour exécuter des opérations sur des données par un microprocesseur à traitement en chevauchement selon une série d'instructions contenant au moins une instruction de branchement conditionnel :
l'étape (a) comprend la détection d'une instruction de branchement conditionnel ; la prédiction d'une première séquence d'instructions à exécuter avant de déterminer l'état d'une condition de laquelle dépend l'étape de ladite détection ; pour une instruction dans une première séquence prédite correspondant à une écriture en mémoire, la détermination d'une première adresse physique de mémoire à laquelle on doit écrire en mémoire les résultats ; et la mémorisation de la première adresse physique dans une première entrée (242) de tampon d'écriture ;
l'étape (b) comprend l'exécution de l'instruction d'écriture en mémoire prédite à l'étape (a) (244) ;
l'étape (c) comprend la mémorisation des résultats de l'étape (b) dans la première entrée (152) de tampon d'écriture ; la détermination de la condition dont dépend l'instruction de branchement conditionnel, et en réponse à une telle détermination, l'indication que ladite prédiction était correcte (260) ; et
l'étape (d) comprend la récupération des résultats de la première entrée (152) de tampon d'écriture pour mémorisation dans l'antémémoire (60).

23. Procédé selon l'une quelconque des revendications 12 à 22, dans lequel, pour mettre en tampon les résultats d'opérations de traitement de données exécutées par ledit moyen central de traitement (20) et un moyen secondaire (70) de traitement, dans lequel l'une desdites entrées (152) de tampon d'écriture comporte une partie de données et une partie d'adresse, et dans lequel les résultats des opérations de l'unité secondaire de traitement correspondent à des mots de donnée d'un nombre de bits plus grand que celui de la portion de données des entrées (152) de tampon d'écriture ;
on effectue ladite étape (a) en déterminant une première adresse de mémoire pour mémoriser des résultats d'une première instruction (170), et en mémorisant la première adresse de mémoire déterminée dans la partie d'adresse d'une première entrée (176) de tampon d'écriture ;
on effectue ladite étape (b) en exécutant une première instruction à l'aide de soit le moyen central de traitement (20) soit le moyen secondaire de traitement (70) ;
dans ladite étape (c), en réponse à l'exécution de la première instruction par l'unité secondaire de traitement, on mémorise les résultats dans un verrou secondaire de données (166) ayant un nombre de bit plus grand que celui de la portion de données de la pluralité d'entrées de tampons d'écriture (152), et en réponse à l'exécution de la première instruction par l'unité centrale de traitement, on mémorise les résultats de la première instruction dans la partie de données de la première entrée (194) de tampon d'écriture ;
et l'on effectue ladite étape (d) en récupérant les résultats de la première instruction dans la mémoire tampon (29) d'écriture pour mémoriser dans l'antémémoire (60) en choisissant le contenu du verrou secondaire (166) de données si la première instruction a été exécutée par le moyen secondaire de traitement (70), ou en choisissant le contenu de la portion de données de la première entrée (152) de tampon d'écriture, si la première instruction a été exécutée par l'unité centrale de traitement (20) ; et en présentant, à l'antémémoire (60), le contenu choisi à l'étape (f) en combinaison avec la première adresse physique mémorisée dans la première entrée (152) de tampon d'écriture.
